# EUROPEAN PATENT APPLICATION

(11) **EP 4 848 638 A1**
(43) Date of publication of application: **02.12.2026**
(21) Application number: 24923455.0
(22) Date of filing: 15.11.2024
(51) Int. Cl.: H04L 5/00

(54) **QUASI-CO-LOCATION RELATIONSHIP DETERMINATION METHOD, DEVICE AND SYSTEM**

(30) Priority: 06.02.2024 CN 202410174322
(71) Applicant: ZTE CORPORATION, Shenzhen, Guangdong 518057 (CN)
(72) Inventor: GOU, Wei, Shenzhen, Guangdong 518057 (CN); HAN, Xianghui, Shenzhen, Guangdong 518057 (CN); KOU, Shuaihua, Shenzhen, Guangdong 518057 (CN); LIU, Xing, Shenzhen, Guangdong 518057 (CN)
(74) Representative: Ziebig Hengelhaupt Intellectual Property Attorneys Patentanwaltskanzlei PartGmbB
(86) International application number: PCT/CN2024/132358
(87) International publication number: WO 2025/167251

(57) **Abstract**

The present application discloses a quasi-co-location (QCL) relationship determination method, device and system. By means of base station notification, a UE can determine whether transmissions in an SBFD symbol and a non-SBFD symbol have a same QCL characteristic of a DMRS antenna port; or according to a rule agreed on with a base station, a UE can also determine whether transmissions in an SBFD symbol and a non-SBFD symbol have a same QCL characteristic of a DMRS antenna port.

## Description

### CROSS-REFERENCE TO RELATED APPLICATIONS

The present application claims priority to the Chinese Patent Application No. 202410174322.1, filed to the CNIPA on February 6, 2024 and entitled "QUASI-CO-LOCATION RELATIONSHIP DETERMINATION METHOD, DEVICE AND SYSTEM", the entire contents of which are incorporated herein by reference.

### TECHNICAL FIELD

The present application relates to the technical field of wireless communications, in particular to a method and device for determining a quasi-co-location relationship, and a system.

### BACKGROUND

Generally, a base station uses the same antenna panel and element to perform downlink transmission, for example, through a control channel, a data channel and a common channel, so these channels may be configured or assumed to have a quasi co-located (QCL) characteristic of a demodulation reference signal (DMRS) antenna port. Through QCL, user equipment (UE) may be helped to perform channel estimation, frequency offset error estimation and signal synchronization processes.

After introducing a subband full duplex (SBFD) technology, the base station performs downlink transmissions in an SBFD symbol/slot and in a non-SBFD symbol/slot, the adopted antenna panel and/or element may be the same or not, possibly resulting in that the downlink transmissions corresponding to the two types of symbols do not have the QCL characteristic of the DMRS antenna port. The UE needs to be aware of whether the transmissions in the SBFD symbol and the non-SBFD symbol have the QCL characteristic of the DMRS antenna port when the base station implements an SBFD operation by using the antenna panel and/or element, but there is no rule in this aspect in a current communication standard.

### SUMMARY

The following summarizes the subject described in detail herein. The summary is not intended to limit the protection scope of the claims.

Embodiments of the present application provide a method and device for determining a quasi-co-location relationship, and a system, so as to determine whether transmissions in an SBFD symbol and a non-SBFD symbol have a QCL characteristic of a DMRS antenna port.

In a first aspect, an embodiment of the present application provides a method for determining a quasi-co-location relationship, including: determining, by UE according to an indication notification sent by a base station or a rule agreed on with the base station, that a first transmission in an SBFD symbol and a second transmission in a non-SBFD symbol have or do not have a same quasi co-located characteristic of a DMRS antenna port.

In a second aspect, an embodiment of the present application provides a method for determining a quasi-co-location relationship, including: causing, by a base station by sending an indication notification to UE or based on an agreed rule, the UE according to the indication notification or the rule agreed on with the base station to determine that a first transmission in an SBFD symbol and a second transmission in a non-SBFD symbol have or do not have a same quasi co-located characteristic of a DMRS antenna port.

In a third aspect, an embodiment of the present application provides a device for determining a quasi-co-location relationship, including at least one processor and a memory configured to be communication connection with the at least one processor. The memory stores instructions capable of being executed by the at least one processor. The instructions are executed by the at least one processor so as to enable the at least one processor to perform the method for determining the quasi-co-location relationship described in the first aspect.

In a fourth aspect, an embodiment of the present application provides a computer-readable storage medium. The computer-readable storage medium stores computer-executable instructions. The computer-executable instructions are configured to cause a computer to perform the method for determining the quasi-co-location relationship described above.

### BRIEF DESCRIPTION OF DRAWING(S)

Accompanying drawings are used for providing further understanding for the technical solutions of the present application, constitute a part of the specification and, together with the examples of the present application are used to explain the technical solutions of the present application without constituting a limitation on the technical solutions of the present application.
FIG. 1a is a DUD structure provided by an embodiment of the present application.
FIG. 1b is a DU structure provided by an embodiment of the present application.
FIG. 2 is a flowchart of a method for determining a quasi-co-location relationship on a UE side provided by an embodiment of the present application.
FIG. 3 is a flowchart of a method for determining a quasi-co-location relationship on a base station side provided by an embodiment of the present application.
FIG. 4 is a flowchart of a method for determining a quasi-co-location relationship provided by a first example of the present application.
FIG. 5 is a flowchart of a method for determining a quasi-co-location relationship provided by a second example of the present application.
FIG. 6 is a flowchart of a method for determining a quasi-co-location relationship provided by a third example of the present application.
FIG. 7 is a flowchart of a method for determining a quasi-co-location relationship provided by a fourth example of the present application.
FIG. 8 is a flowchart of a method for determining a quasi-co-location relationship provided by a fifth example of the present application.
FIG. 9 is a flowchart of a method for determining a quasi-co-location relationship provided by a sixth example of the present application.
FIG. 10 is a flowchart of a method for determining a quasi-co-location relationship provided by a seventh example of the present application.
FIG. 11 is a flowchart of a method for determining a quasi-co-location relationship provided by an eighth example of the present application.
FIG. 12 is a flowchart of a method for determining a quasi-co-location relationship provided by a ninth example of the present application.
FIG. 13 is a flowchart of a method for determining a quasi-co-location relationship provided by a tenth example of the present application.
FIG. 14 is a flowchart of a method for determining a quasi-co-location relationship provided by a twelfth example of the present application.
FIG. 15 is a flowchart of a method for determining a quasi-co-location relationship provided by a thirteenth example of the present application.
FIG. 16 is a flowchart of a method for determining a quasi-co-location relationship provided by a fourteenth example of the present application.
FIG. 17 is a schematic diagram of structural connection of a device provided by an embodiment of the present application.

### DETAILED DESCRIPTION

For making objectives, technical solutions and advantages of the present application clearer, the present application is further described in detail below in combination with accompanying drawings and embodiments. It is to be understood that the specific examples described here are only for explaining the present application instead of limiting the present application. In addition, characteristics, operations or features described in the specification may be combined in any proper manner to form various implementations. Meanwhile, all steps or actions described in the method may also be exchanged or adjusted in sequence in a manner apparent to those skilled in the art. Thus, various sequences in the specification and accompanying drawings are merely for clearly describing a certain embodiment instead of meaning a necessary sequence, unless stated that a certain sequence must be observed.

In the description of the present application, "a plurality of" means one or more, "plurality of" means two or more, "greater than," "less than," "exceed" and the like are understood as excluding a given figure, and "above," "below," "within" and the like are understood as including a given figure. Terms such as "first" and "second" are used only to distinguish technical features and are not to be understood as indicating or implying a relative significance or implicitly specifying the quantity, or primary and secondary relationship of the technical features indicated.

Ordinal numbers for components herein, such as "first" and "second", are merely used for distinguishing described objects without any sequential or technical meaning. Unless otherwise specified, "connection" and "connected" in the present application include direct and indirect connection (connected).

With rapid development of a cell mobile communication system, a sub-band full duplex (SBFD) technology may be an important feature for further improving efficiency and performance of a new-generation mobile communication technology. The sub-band full duplex technology may achieve sub-band full duplex by using resources of different frequencies. The SBFD may improve a coverage of the communication and reduce communication delay, for in a time division duplex (TDD) transmission manner, though downlink (DL) and/or uplink (UL) resources cannot be accessed at the same time, the downlink (DL) and/or uplink (UL) resources are available whenever possible through a proper configuration. Through the SBFD, a UL coverage of a TDD system can be improved, delay of the UL transmission is reduced, and a capacity of the UL transmission is increased.

In some or all DL symbols or slots, one UL sub-band and at most two DL sub-bands are configured. For example, the UL sub-band and the DL sub-band are required to be configured with downlink bandwidth part (DL BWP) and uplink bandwidth part (UL BWP) pairs, and the DL BWP and UL BWP pairs are required to have a same center frequency. In a frequency domain, a frequency-domain resource of the UL sub-band and a frequency-domain resource of the DL sub-band are usually regarded as being configured within a frequency-domain range of the DL BWP. The DL BWP is effective in the DL symbol or slot. However, in the frequency domain, the frequency-domain resource of the UL sub-band and the frequency-domain resource of the DL sub-band may also be configured beyond the DL BWP, for example, the frequency-domain resource of the UL sub-band and the frequency-domain resource of the DL sub-band are partially or totally beyond the frequency-domain range of the DL BWP. The UL sub-band and the DL sub-band are also called an SBFD sub-band, namely, one SBFD sub-band is configured in the DL BWP in the DL symbol/slot, and the SBFD sub-band usually includes at least one DL sub-band and one UL sub-band.

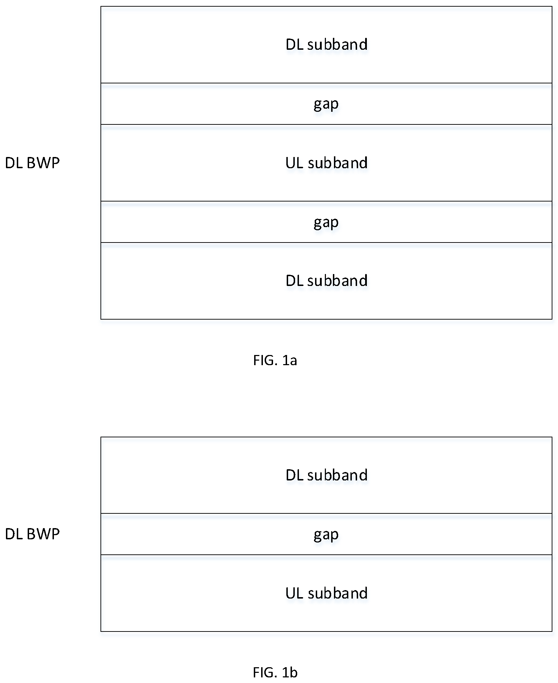

For example, in a TDD carrier wave of 100 MHz, 20 continuous resource blocks (RBs) are configured as the UL sub-band in the DL BWP in the DL symbol/slot, the rest of frequency-domain resources of the DL BWP are the DL sub-band (gap may be not configured), or one DL sub-band may be configured in the DL symbol/slot in the DL BWP. In this way, in the DL symbol/slot, the UL symbol may be used for the UL transmission, and the DL sub-band may be used for the DL transmission. In FIG. 1a, one UL sub-band and the DL sub-bands are configured in the DL symbol/slot, and this structure is usually called "DUD" (a structure based on the frequency domain). In FIG. 1a, one UL sub-band and the DL sub-band are configured in the DL symbol/slot, and this structure is usually called "DU"/"UD"(a structure based on the frequency domain).

In a current stage, the subband full duplex technology includes the following features: a base station is capable of simultaneously performing receiving (in the UL sub-band) and sending (in the DL sub-band) in a same time domain. UE is incapable of simultaneously performing receiving (in the DL sub-band) and sending (in the UL sub-band) in a same time domain. Here, the UL sub-band and the DL sub-band are configured in a same OFDM symbol/slot and are frequency division.

For convenient descriptions, some technical terms are as follows: a symbol configured with the SBFD sub-band is called an SBFD symbol, and a slot including the SBFD symbol is called an SBFD slot. A symbol configured with no SBFD sub-band is called a non-SBFD symbol (namely, one ordinary symbol, non-SBFD symbol), and a slot excluding the SBFD symbol is called a non-SBFD slot. In the following, the two types of symbols are distinguished by using the SBFD symbol and the non-SBFD symbol in expressions.

For sending in the different types of symbols (the SBFD symbol and the non-SBFD symbol), the antenna panels may differ, and these differences may be that the antenna panels used for sending are the same or not, or that in a case where the adopted antenna panels are the same, elements of the adopted antenna panels are different (including the quantity of the elements and the elements per se), for example, the quantities of the elements are the same but the elements are different, which also means that the elements are different. Namely, under the requirement of the current quasi co-location (QCL) characteristic, the same transmission characteristic may usually remain between the different sendings only by performing different sendings to the UE (in different symbol types or the same symbol type) by using the same element (namely, the same element of the same panel), for example, remaining the same time-domain, frequency-domain or space-domain transmission characteristic, or the same quasi co-located characteristic of the demodulation reference signal (DMRS) antenna port exists between the different sendings. Uncommonly, in a case where different antenna panels/elements are specially processed, though different transmissions are performed by using different antenna panels/elements, the same quasi co-located characteristic of the DMRS antenna port may possibly exist between the different transmissions.

Given that use of the antenna panels above may be deployed in a future actual network, for example, in the actual network, there are the transmission in the SBFD symbol/slot (in the UL sub-band or the DL sub-band) and the transmission in the non-SBFD symbol/slot (in the DL BWP or the UL BWP), and the two transmissions undergo different interferences and use different antenna panels and/or elements in the panels. Thus, the present application solves the quasi co-located characteristic, namely, the QCL characteristic, between the transmissions of two different types of symbols through the following considered methods for the two transmissions.

Embodiments of the present application provide a method and device for determining a quasi-co-location relationship, and a system. UE may determine, in a manner of notification by a base station, whether a QCL characteristic of a DMRS antenna port exists between transmissions in an SBFD symbol and a non-SBFD symbol, or determine, according to a rule agreed on with the base station, whether the QCL characteristic of the DMRS antenna port exists between the transmissions in the SBFD symbol and the non-SBFD symbol, thus, the embodiment of the present application provides means for determining the QCL relationship of the DMRS antenna port between the different transmissions between the SBFD symbol and the non-SBFD symbol. The UE, after determining the above QCL relationship, can apply the QCL characteristic to a random access process and various transmissions after the random access process.

The method and device for determining the quasi-co-location relationship, and the system are described below with reference to the accompanying drawings.

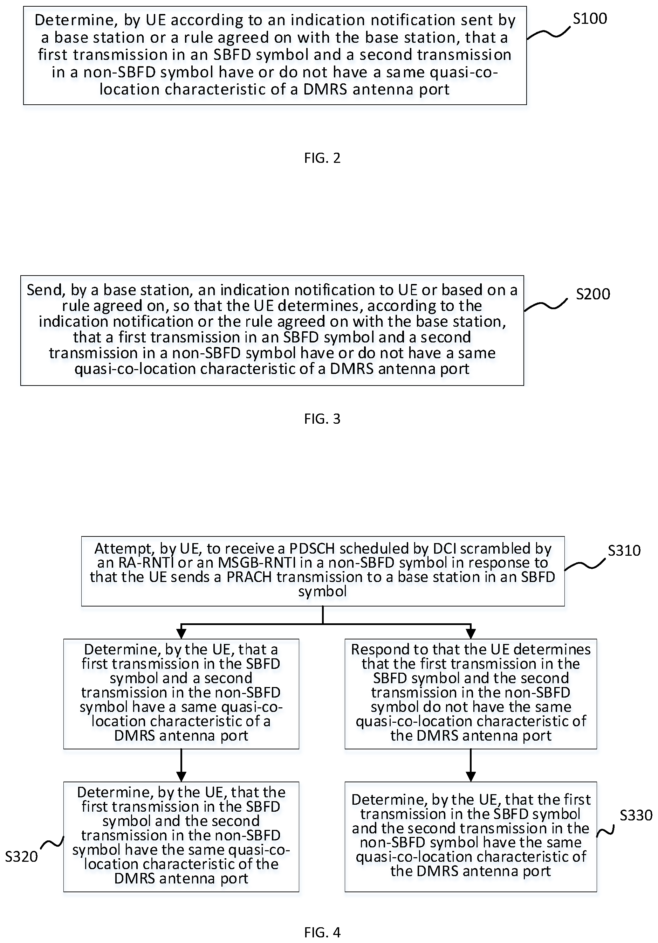

As shown in FIG. 2, FIG. 2 is a flowchart of a method for determining a quasi-co-location relationship on a UE side provided by an embodiment of the present application. The method includes, but is not limited to, the following step: step S100, UE determines, according to an indication notification sent by a base station or a rule agreed on with the base station, that a first transmission in an SBFD symbol and a second transmission in a non-SBFD symbol have or do not have a same quasi co-located characteristic of a DMRS antenna port.

Given that the UE is not aware of implementation of the base station, for example, the UE is not aware of whether the base station uses a same antenna panel and/or element for performing different transmissions in two symbol types (the SBFD symbol and the non-SBFD symbol), or the UE is not aware of whether the different transmissions have the same QCL characteristic of the DMRS antenna port, based on the related assumptions. Thus, the base station may notify the UE through signaling, namely, send an indication notification to the UE to notify the UE of whether the transmissions in the different symbol types have or do not have the same QCL characteristic of the DMRS antenna port. The UE may also agree with the base station on the different transmissions received by the UE, and the UE determines, according to the symbol types where the different transmissions are located, that these transmissions have or do not have the same QCL characteristic of the DMRS antenna port.

Correspondingly, as shown in FIG. 3, FIG. 3 is a flowchart of a method for determining a quasi-co-location relationship on a base station side provided by an embodiment of the present application. The method includes, but is not limited to, the following step: step S200, a base station causes, by sending an indication notification to UE or based on an agreed rule, the UE according to the indication notification or the rule agreed on with the base station to determine that a first transmission in an SBFD symbol and a second transmission in a non-SBFD symbol have or do not have a same quasi co-located characteristic of a DMRS antenna port.

Generally speaking, the indication notification includes a signaling notification sent by the base station via signaling and/or a broadcast notification sent through system broadcast information. The method for determining the quasi-co-location relationship further includes: receiving the signaling notification by the UE, where the signaling notification is used for notifying the UE that the first transmission and the second transmission have or do not have the same quasi co-located characteristic of the DMRS antenna port, or used for providing antenna panel information, so that the UE determines, according to the antenna panel information, that the first transmission and the second transmission have or do not have the same quasi-co-location characteristic of the DMRS antenna port; or receiving the broadcast notification by the UE, where the broadcast notification is used for notifying the UE that the first transmission and the second transmission have or do not have the same quasi co-located characteristic of the DMRS antenna port, or used for indicating the UE to determine, according to a quasi-co-location relationship in a current protocol, that the first transmission and the second transmission have or do not have the same quasi co-located characteristic of the DMRS antenna port.

There may be various implementations for notifying the UE, through the signaling, whether the different transmissions in the SBFD symbol and the non-SBFD symbol have the same QCL characteristic of the DMRS antenna port.

In the first implementation, the base station notifies the UE, via the signaling, that the first transmission in the SBFD symbol/slot (in the UL sub-band and/or DL sub-band) and the second transmission in the non-SBFD symbol/slot (in the DL BWP and/or UL BWP) have or do not have the same QCL characteristic of the DMRS antenna port.

In the second implementation, the base station notifies the UE, via the signaling, of some related information for determining whether the first transmission and the second transmission have or do not have the same QCL characteristic of the DMRS antenna port, and the UE can determine, based on the related information (and the rule agreed on by the base station and the UE), that the first transmission and the second transmission have or do not have the same QCL characteristic of the DMRS antenna port. For example, the base station notifies of the first transmission and the second transmission by using the at least one of the following information: an antenna panel, the quantity of elements, positions of the elements, an antenna port or the like. Here, the base station and the UE agree that as long as the first transmission and the second transmission use the same antenna panel and the element, the UE assumes that the first transmission and the second transmission have the same QCL characteristic of the DMRS antenna port. Here, "the same element" includes that the panels where the elements are located are the same, the quantities of the elements are the same, and the positions of the elements are the same, otherwise the elements are different. In another case where the first transmission and the second transmission use different panels or use the same panel but different elements, and these devices are specially designed or processed, the first transmission and the second transmission have the same QCL characteristic of the DMRS antenna port, so in this case, the base station is supposed to notify the UE again that the first transmission and the second transmission have the same QCL characteristic of the DMRS antenna port.

In the third implementation, the base station sends information through the system broadcast information, and the information is used for indicating that the first transmission of the SBFD symbol and the second transmission of the non-SBFD symbol follow a QCL relationship in a current protocol, for example, a DMRS-related QCL characteristic defined in the current protocol TS38.213i00 and TS38.214i00. In other words, in this case, the UE can ignore influence of symbol types where the first transmission and the second transmission are located, namely, the UE processes the first transmission in the SBFD symbol also according to a transmission in the non-SBFD symbol (namely, the DL symbol), thus, the first transmission is also regarded as the transmission in the non-SBFD symbol, so as to follow the QCL characteristic in the current protocol.

In the fourth implementation, the base station sends information through the system broadcast information, and the information is used for indicating that the first transmission of the SBFD symbol and the second transmission of the non-SBFD symbol have or do not have the same QCL characteristic of the DMRS antenna port. In a case of not having the same QCL characteristic of the DMRS antenna port, the QCL characteristic of the DMRS antenna port between the first transmission and the second transmission is determined according to other manners.

In some embodiments, the UE and the base station agree on the rule that the UE determines that the first transmission and the second transmission have or do not have the same quasi co-located characteristic of the DMRS antenna port according to the symbol type of the first transmission and the symbol type of the second transmission.

In an example, the method for determining the quasi-co-location relationship implemented based on the agreed rule further includes: determining, by the UE by default, that the first transmission in the SBFD symbol and the second transmission in the non-SBFD symbol have the same quasi co-located characteristic of the DMRS antenna port in a case where the base station configures an SBFD sub-band and the UE does not receive the indication notification; and determining, by the UE in a case where the UE receives the indication notification, that the first transmission in the SBFD symbol and the second transmission in the non-SBFD symbol do not have the same quasi-co-location characteristic of the DMRS antenna port, or determining, by the UE according to the indication notification, that the first transmission in the SBFD symbol and the second transmission in the non-SBFD symbol have or do not have the same quasi co-located characteristic of the DMRS antenna port.

Namely, the agreed rule is that the first transmission in the SBFD symbol and the second transmission in the non-SBFD symbol have the same quasi co-located characteristic of the DMRS antenna port, and the UE performs judgment on the quasi-co-location relationship according to the above default rule in a case where the base station configures the SBFD sub-band and does not configure the corresponding indication notification for the UE; and in a case where the UE receives the indication notification subsequently, the UE updates the agreed rule that the first transmission in the SBFD symbol and the second transmission in the non-SBFD symbol do not have the same quasi co-located characteristic of the DMRS antenna port, or the UE determines that the first transmission and the second transmission have or do not have the quasi-co-location relationship directly according to a content of the indication notification.

In an example, the method for determining the quasi-co-location relationship implemented based on the agreed rule further includes: determining, by the UE by default, that the first transmission in the SBFD symbol and the second transmission in the non-SBFD symbol do not have the same quasi co-located characteristic of the DMRS antenna port in a case where the base station configures an SBFD sub-band and the UE does not receive the indication notification; and determining, by the UE in a case where the UE receives the indication notification, that the first transmission in the SBFD symbol and the second transmission in the non-SBFD symbol have the same quasi-co-location characteristic of the DMRS antenna port, or determining, by the UE according to the indication notification, that the first transmission in the SBFD symbol and the second transmission in the non-SBFD symbol have or do not have the same quasi co-located characteristic of the DMRS antenna port.

Namely, the agreed rule is that the first transmission in the SBFD symbol and the second transmission in the non-SBFD symbol do not have the same quasi co-located characteristic of the DMRS antenna port, and the UE performs judgment on the quasi-co-location relationship according to the above default rule in a case where the base station configures the SBFD sub-band and does not configure the corresponding indication notification for the UE; and in a case where the UE receives the indication notification subsequently, the UE updates the agreed rule that the first transmission in the SBFD symbol and the second transmission in the non-SBFD symbol have the same quasi co-located characteristic of the DMRS antenna port, or the UE determines that the first transmission and the second transmission have or do not have the quasi-co-location relationship directly according to a content of the indication notification.

The base station and the UE agree on the rule to determine whether the different transmissions in the SBFD symbol and the non-SBFD symbol have the same QCL characteristic of the DMRS antenna port. For example, the base station sends the different transmissions in the different types of symbols, the UE intends to receive these different transmissions, the UE assumes by default that the different transmissions in the same type of symbols have the same QCL characteristic of the DMRS antenna port. The UE can determine, according to further QCL-related configuration signaling of the base station, whether the different transmissions in the different types of symbols have or do not have the same QCL characteristic of the DMRS antenna port.

For example, the base station divides a PRACH sequence for a PRACH transmission into a plurality of groups, one group of the sequence is used for representing that the UE is capable of simultaneously performing receiving and sending in the SBFD symbol and the non-SBFD symbol, the UE uses the sequence in this group for the PRACH transmission (or a PRACH repetition transmission between the different types of symbols) through a PRACH resource (the PRACH resource is shared for UE with a non-SBFD sub-band capability and UE with an SBFD sub-band capability) in a UL symbol, or the base station configures an independent PRACH resource in the SBFD symbol (the PRACH resource is for the UE with the SBFD sub-band capability), the UE uses the independent PRACH resource for performing the PRACH transmission (in this case, the UE may use all the PRACH sequences and does not need to group the PRACH sequence, because the independent PRACH resource can be used only by the UE with the SBFD sub-band capability), so: the base station can schedule a PDCCH of the UE scrambled by RA-RNTI and a PDSCH (or a PDSCH repetition) scheduled by DCI in the PDCCH in any of the SBFD symbol and the non-SBFD symbol; the base station can also schedule a PUSCH (or a PUSCH repetition) of the UE scheduled by RAR UL grant in any type of symbols; the base station can also schedule a PDCCH scrambled by TC-RNTI and a PDSCH (or a PDSCH repetition) scheduled by the PDCCH in any type of symbols; the base station can also schedule an HARQ-ACK PUCCH (or a PUCCH repetition) corresponding to the PDSCH in any type of symbols; in a case where the UE determines, based on the above method (the base station notifies through the signaling or according to the agreed rule), that the first transmission in the SBFD symbol and the second transmission in the non-SBFD symbol have the same QCL characteristic of the DMRS antenna port, the UE can assume that there is the same QCL characteristic of the DMRS antenna port respectively between the above downlink transmissions as well as between the above downlink transmission and SSB (s) associated with the PRACH transmission; and otherwise, the UE assumes that there is the same QCL characteristic of the DMRS antenna port between the above downlink transmission and the downlink transmission in the same type of symbol, the UE assumes that there is the same QCL characteristic of the DMRS antenna port between the above downlink transmission and an SSB in the same type of symbol (the SSB is associated with the PRACH transmission), namely, there is no QCL characteristic of the DMRS antenna port between the downlink transmissions in the different types of symbols.

For example, the base station divides the PRACH sequence for the PRACH transmission into two groups, and the first group of sequence is used for representing that the UE only has the following capability: the UE only supports performing receiving or sending in different slots in the SBFD symbol or the non-SBFD symbol, where only one symbol type in one slot is used for performing the receiving or the sending; and the second group of sequence is used for representing that the UE is capable of performing receiving or sending in different slots in the SBFD symbol and the non-SBFD symbol (for example, one transmission is performed in the SBFD symbol in slot 1 at the first time and performed in the non-SBFD symbol in slot 2 at the second time, and only one symbol type can be used in each slot). The receiving or sending is repetitive or periodic, and all receivings or all sendings can only be in the same symbol type.

In a case where the UE uses the first group of sequence for the PRACH transmission (or the PRACH repetition transmission between the same type of symbols), then: the base station and the UE agree that a PDSCH repetition scheduled by DCI in the PDCCH scrambled by the RA-RNTI of the UE can only be transmitted in the same symbol type, for example, only in the SBFD symbol or only in different slots in the non-SBFD symbol; the base station can also schedule a PUSCH repetition scheduled by RAR UL grant of the UE in the different slots in the same type of symbol; the base station can also schedule a PDSCH repetition scheduled by the PDCCH scrambled by TC-RNTI in the different slots in the same type of symbol; the base station can also schedule an HARQ-ACK PUCCH repetition corresponding to the PDSCH in the different slots in the same type of symbol; in a case where the UE determines, based on the above method (the base station notifies through the signaling or according to the agreed rule), that the first transmission in the SBFD symbol and the second transmission in the non-SBFD symbol have the same QCL characteristic of the DMRS antenna port, the UE can assume that there is the same QCL characteristic of the DMRS antenna port respectively between the above downlink transmissions as well as between the above downlink transmission and SSB (s) associated with the PRACH transmission; and otherwise, the UE assumes that there is the same QCL characteristic of the DMRS antenna port between the above downlink transmission and the downlink transmission in the same type of symbol, the UE assumes that there is the same QCL characteristic of the DMRS antenna port between the above downlink transmission and an SSB in the same type of symbol (the SSB is associated with the PRACH transmission), namely, there is no QCL characteristic of the DMRS antenna port between the downlink transmissions in the different types of symbols.

In a case where the UE uses the second group of sequence for the PRACH transmission (or the PRACH repetition transmission between the same type of symbols), then: the base station and the UE agree that a PDSCH repetition scheduled by DCI in the PDCCH scrambled by RA-RNTI of the UE can be in different slots in two types of symbols, for example, the first transmission is only in slot 1 in the SBFD symbol, and the second transmission is in slot 2 in the non-SBFD symbol; the base station can schedule a PUSCH repetition scheduled by RAR UL grant of the UE in the different slots in the two types of symbols, for example, the first transmission is only in slot 1 in the SBFD symbol, and the second transmission is in slot 2 in non-SBFD symbol; the base station can also schedule the PDSCH repetition scheduled by the PDCCH scrambled by TC-RNTI in the different slots in the two types of symbols, for example, the first transmission is only in slot 1 in the SBFD symbol, and the second transmission is in slot 2 in the non-SBFD symbol; the base station can also schedule the HARQ-ACK PUCCH repetition corresponding to the PDSCH in the different slots in the two types of symbols, for example, the first transmission is only in slot 1 in the SBFD symbol, and the second transmission is in slot 2 in the non-SBFD symbol; in a case where the UE determines, based on the above method (the base station notifies through the signaling or according to the agreed rule), that the first transmission in the SBFD symbol and the second transmission in the non-SBFD symbol have the same QCL characteristic of the DMRS antenna port, the UE can assume that there is the same QCL characteristic of the DMRS antenna port respectively between the above downlink transmissions as well as between the above downlink transmission and SSB (s) associated with the PRACH transmission; and otherwise, the UE assumes that there is the same QCL characteristic of the DMRS antenna port between the above downlink transmission and the downlink transmission in the same type of symbol, the UE assumes that there is the same QCL characteristic of the DMRS antenna port between the above downlink transmission and an SSB in the same type of symbol (the SSB is associated with the PRACH transmission), namely, there is no QCL characteristic of the DMRS antenna port between the downlink transmissions in the different types of symbols.

In some embodiments, the antenna panel information includes at least one of the following: an identity of an antenna panel; a quantity of elements of the antenna panel; positions of the elements of the antenna panel; or an identity of an antenna port.

In some embodiments, the signaling notification includes at least one of the following: a notification sent through RRC signaling; a notification sent through MAC CE signaling; or a notification sent through DCI in a PDCCH.

In some embodiments, the DCI includes at least one of the following: DCI scheduling a PDSCH; DCI for activating an SPS configuration; DCI for activating dormancy; DCI for deactivating the SPS configuration; DCI for deactivating a CG PDSCH; DCI for activating a CG PUSCH; or DCI for triggering an HARQ-ACK codebook retransmission.

In some embodiments, the RRC signaling includes at least one of the following: RRC signaling for configuring an SPS configuration; RRC signaling for configuring a PDSCH time-domain resource; RRC signaling for configuring a DMRS of a PDSCH; RRC signaling for configuring a PDCCH resource; RRC signaling for configuring a DMRS of a PDCCH; RRC signaling for configuring an SBFD sub-band, a UL sub-band or a DL sub-band; RRC signaling for configuring a CG PUSCH; RRC signaling for configuring a PUCCH; or self-defined RRC signaling for configuring whether the first transmission and the second transmission have or do not have the same quasi co-located characteristic of the DMRS antenna port.

In some embodiments, the system broadcast message includes at least one of the following: an SSB, an SIB1, an SIB2 or a new SIB.

The above first transmission and second transmission may include one of the following: a transmission of downlink data, including, but not limited to: a PDSCH scrambled by an RA-RNTI, a P-RNTI, an SI-RNTI, an MSGB-RNTI, a temporary C-RNTI, an MCS-C-RNTI, a CS-RNTI, a G-CS-RNTI, a G-RNTI or an MCCH-RNTI (being scrambled by different RNTIs means different effects and purposes of the PDSCH), a unicast PDSCH scrambled by a C-RNTI, or a multicast PDSCH scrambled by the C-RNTI.

The transmission of the downlink control includes, but is not limited to: a PDCCH scrambled by the P-RNTI and used for paging and system information updating indication, a PDCCH scrambled by the SI-RNTI and used for system broadcast information, a PDCCH scrambled by the RA-RNTI and used for a random access response, a PDCCH scrambled by the MSGB-RNTI and used for a two-step random access response, a PDCCH scrambled by the Temporary C-RNTI and used for contention resolution (in the random access process), a PDCCH scrambled by the Temporary C-RNTI and used for an msg3 transmission in the random access process, a PDCCH scrambled by the C-RNTI and used for the uplink transmission of dynamic scheduling unicast, a PDCCH scrambled by the MCS-C-RNTI and used for the uplink transmission of dynamic scheduling unicast, a PDCCH scrambled by the C-RNTI and used for the downlink transmission of dynamic scheduling unicast, a PDCCH scrambled by the NCR-RNTI and used for an NCR operation, a PDCCH scrambled by the MCS-C-RNTI and used for the unicast downlink transmission of dynamic scheduling, a PDCCH scrambled by the C-RNTI and used for PDCCH order triggering random access, a PDCCH scrambled by the C-RNTI and used for retransmission multicast service, a PDCCH scrambled by the CS-RNTI and used for activation/deactivation/retransmission of a configured unicast/multicast service, a PDCCH scrambled by the G-CS-RNTI and used for activation/deactivation/retransmission of the configured multicast service, a PDCCH scrambled by the TPC-PUCCH-RNTI and used for PUCCH power, a PDCCH scrambled by the TPC-PUSCH-RNTI and used for PUSCH power, a PDCCH scrambled by the TPC-SRS-RNTI and used for SRS triggering and power, a PDCCH scrambled by the INT-RNTI and used for indicating preempting in downlink, a PDCCH scrambled by the SFI-RNTI and used for indicating a slot format, a PDCCH scrambled by the SP-CSI-RNTI and used for activating reporting a semi-static CSI report on the PUSCH, a PDCCH scrambled by the CI-RNTI and used for uplink canceling indication, a PDCCH scrambled by the G-RNTI and used for multicast service of dynamic scheduling, and a PDCCH scrambled by the MCCH-RNTI and used for dynamic scheduling MCCH signaling and MCCH updating.

The transmission corresponding to the downlink transmission common channel includes, but is not limited to: SS/PBCH block (recorded as an SSB), CORESET#0.

The transmission corresponding to the downlink reference signal includes, but is not limited to: DMRS, CSI-RS, PRS, and TRS.

The above DCI scrambled by the RNTI means that CRC is added to the DCI, and the CRC is scrambled by the RNTI. The above PDCCH scrambled by the RNTI indicates that the PDCCH carries one piece of DCI, CRC is added to the DCI, and the CRC is scrambled by the RNTI.

Some examples are given below for describing the method for determining the quasi-co-location relationship for related transmissions in the random access process.

### Example 1

As shown in FIG. 4, a method for determining a quasi-co-location relationship in this example further includes: step S310, UE attempts to receive a PDSCH scheduled by DCI scrambled by an RA-RNTI or an MSGB-RNTI in a non-SBFD symbol in a case where the UE sends a PRACH transmission to a base station in an SBFD symbol, the PRACH transmission is associated with at least one SSB or CSI-RS resource, and the SSB or CSI-RS resource is in the SBFD symbol; step S320, the UE assumes that the PDSCH and the SSB or CSI-RS resource have a same quasi co-located characteristic of a DMRS antenna port in a case where the UE determines that a first transmission in the SBFD symbol and a second transmission in the non-SBFD symbol have the same quasi co-located characteristic of the DMRS antenna port; or step S330, the UE assumes that the PDSCH and the SSB or CSI-RS resource do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

In one implementation scene of Example 1: in a random access process of the UE, the UE sends one PRACH transmission through (a UL sub-band of) of the SBFD symbol, the UE, in response to a response of the base station, detects and receives one piece of DCI scrambled by an RA-RNTI or an MSGB-RNTI, and receives one transmission block in a corresponding PDSCH (namely, the PDSCH scheduled by the DCI is received, and the PDSCH includes one transmission block) in the non-SBFD symbol, the PRACH transmission is associated with one or more SSBs or CSI-RS resources, and the SSB or the CSI-RS is in SBFD symbol.

In the above scene, further, in a case where the UE determines, based on the above method (the base station notifies through signaling or according to an agreed rule), that the first transmission in the SBFD symbol and the second transmission in the non-SBFD symbol have the same QCL characteristic of the DMRS antenna port, the UE assumes that there is the same QCL characteristic of the DMRS antenna port between the SSB or CSI-RS resources used by the UE and associated with the PRACH (namely, the UE assumes that there is the same QCL characteristic of the DMRS antenna port between the PDSCH and the SSB or CSI-RS resources, though they are in different types of symbols). In this way, the UE may receive and decode the PDSCH based on the SSB or CSI-RS by using the QCL characteristic. For example, the UE assumes that the DMRS port of the PDSCH and the SSB or CSI-RS resources have the QCL characteristic in aspects of Doppler shift, Doppler spread, average delay, delay spread, and spatial RX parameter.

In the above scene, further, in a case where the UE determines, based on the above method (the base station notifies through signaling or according to an agreed rule), that the first transmission in the SBFD symbol and the second transmission in the non-SBFD symbol do not have the same QCL characteristic of the DMRS antenna port, the UE forbids assuming that there is the same QCL characteristic of the DMRS antenna port between the SSB or CSI-RS resources used by the UE and associated with the PRACH. For example, the UE forbids assuming that the DMRS port of the PDSCH and the SSB or CSI-RS resources have the QCL characteristic in aspects of Doppler shift, Doppler spread, average delay, delay spread, and spatial RX parameter. In other words, the UE believes that there is no same QCL characteristic of the DMRS antenna port between the SSB or CSI-RS resources associated with the PRACH. In other words, the UE can assume that there is the same QCL characteristic of the DMRS antenna port between the SSB or CSI-RS resources associated with the PRACH only when the SSB or CSI-RS resources associated with the PRACH are all in the same type of symbol, otherwise, there is no same QCL characteristic of the DMRS antenna port between the SSB or CSI-RS resources associated with the PRACH.

"Attempt" in Example 1 means that the UE, after performing some actions, is in a state of waiting for a response message or in a state of detecting a returned message, so "attempting to receive" in Example 1 above may also be expressed as "attempting to receive or detect", and the same expressions appearing in the subsequent examples are explained according to this, which are not repeated. "Assuming" in Example 1 (expressed as assume in a protocol) means that the UE assumes certain parameters or states, the UE conducts subsequent judgments or performs actions based on these parameters or states, and the same expressions appearing in the subsequent examples are explained according to this, which are not repeated.

### Example 2

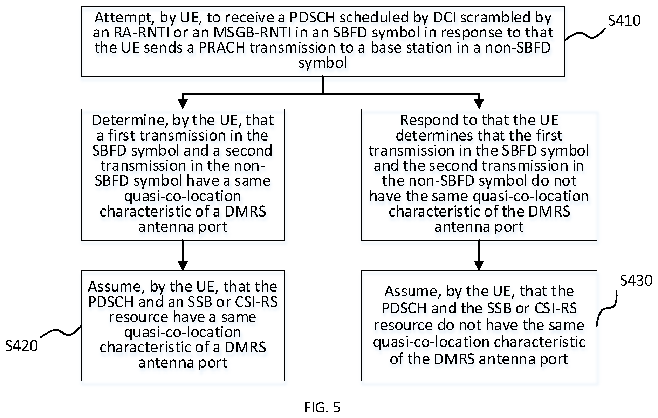

As shown in FIG. 5, a method for determining a quasi-co-location relationship in this example further includes: step S410, UE attempts to receive a PDSCH scheduled by DCI scrambled by an RA-RNTI or an MSGB-RNTI in an SBFD symbol in a case where the UE sends a PRACH transmission to a base station in a non-SBFD symbol, where the PRACH transmission is associated with at least one SSB or CSI-RS resource, and the SSB or CSI-RS resource is in the non-SBFD symbol. Step S420, the UE assumes that the PDSCH and the SSB or CSI-RS resource have a same quasi co-located characteristic of a DMRS antenna port in a case where the UE determines that a first transmission in the SBFD symbol and a second transmission in the non-SBFD symbol have the same quasi co-located characteristic of the DMRS antenna port; or step S430, the UE assumes that the PDSCH and the SSB or CSI-RS resource do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

In one implementation scene of Example 2: in a random access process of the UE, the UE sends one PRACH transmission through (a UL BWP of) of the non-SBFD symbol, the UE, in response to a response of the base station, detects and receives one piece of DCI scrambled by an RA-RNTI or an MSGB-RNTI, and receives one transmission block in a corresponding PDSCH (namely, the PDSCH scheduled by the DCI is received, and the PDSCH includes one transmission block) in the SBFD symbol, the PRACH transmission is associated with one or more SSBs or CSI-RS resources, and the SSB or the CSI-RS is in the non-SBFD symbol.

In the above scene, further, in a case where the UE determines, based on the above method (the base station notifies through signaling or according to an agreed rule), that the first transmission in the SBFD symbol and the second transmission in the non-SBFD symbol have the same QCL characteristic of the DMRS antenna port, the UE assumes that there is the same QCL characteristic of the DMRS antenna port between the SSB or CSI-RS resources used by the UE and associated with the PRACH (namely, the UE assumes that there is the same QCL characteristic of the DMRS antenna port between the PDSCH and the SSB or CSI-RS resources, though they are in different types of symbols). In this way, the UE may receive and decode the PDSCH based on the SSB or CSI-RS by using the QCL characteristic. For example, the UE assumes that the DMRS port of the PDSCH and the SSB or CSI-RS resources have the QCL characteristic in aspects of Doppler shift, Doppler spread, average delay, delay spread, and spatial RX parameter.

In the above scene, further, in a case where the UE determines, based on the above method (the base station notifies through signaling or according to an agreed rule), that the first transmission in the SBFD symbol and the second transmission in the non-SBFD symbol do not have the same QCL characteristic of the DMRS antenna port, the UE forbids assuming that there is the same QCL characteristic of the DMRS antenna port between the SSB or CSI-RS resources used by the UE and associated with the PRACH. For example, the UE forbids assuming that the DMRS port of the PDSCH and the SSB or CSI-RS resources have the QCL characteristic in aspects of Doppler shift, Doppler spread, average delay, delay spread, and spatial RX parameter. In other words, the UE believes that there is no same QCL characteristic of the DMRS antenna port between the SSB or CSI-RS resources associated with the PRACH. In other words, the UE can assume that there is the QCL characteristic of the DMRS antenna port between the SSB or CSI-RS resources associated with the PRACH only when the SSB or CSI-RS resources associated with the PRACH are all in the same type of symbol, otherwise, there is no QCL characteristic of the DMRS antenna port between the SSB or CSI-RS resources associated with the PRACH.

### Example 3

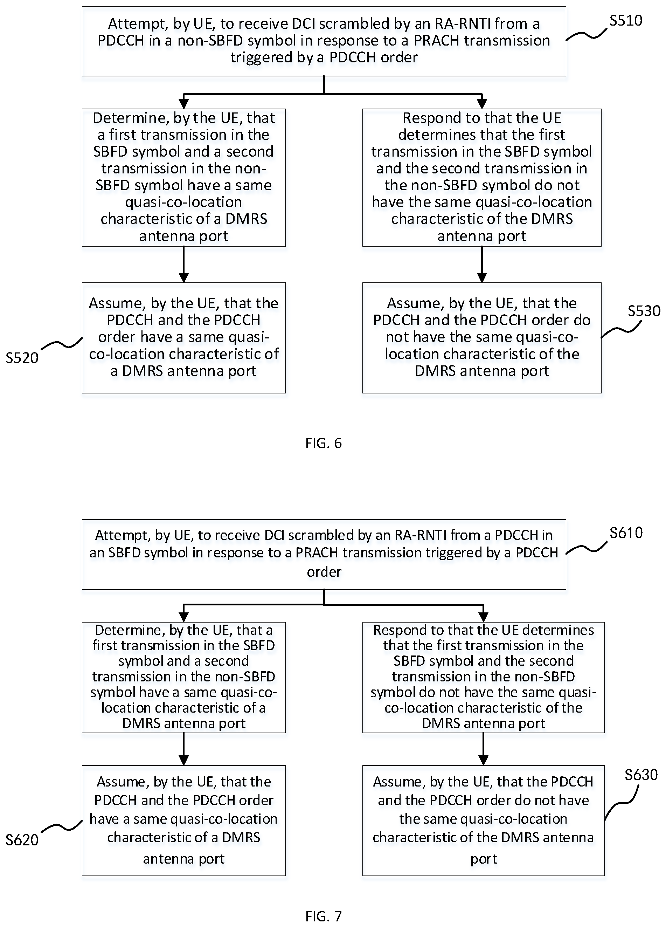

As shown in FIG. 6, a method for determining a quasi-co-location relationship in this example further includes: step S510, UE attempts to receive DCI scrambled by an RA-RNTI from a PDCCH in a non-SBFD symbol in response to a PRACH transmission triggered by a PDCCH order, where the PDCCH order triggers a contention-free random access process for SpCell, and the PDCCH order is transmitted in an SBFD symbol; step S520, the UE assumes that the PDCCH and the PDCCH order have a same quasi co-located characteristic of a DMRS antenna port in a case where the UE determines that a first transmission in the SBFD symbol and a second transmission in the non-SBFD symbol have the same quasi co-located characteristic of the DMRS antenna port; or step S530, the UE assumes that the PDCCH and the PDCCH order do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

In an implementation scene of Example 3: the UE can attempt to receive DCI in the PDCCH scrambled by the RA-RNTI in the non-SBFD symbol in response to one PRACH transmission triggered by the PDCCH order. The PDCCH order triggers one contention-free random access process for SpCell, and the PDCCH order is transmitted in the SBFD symbol.

In the above scene, further, in a case where the UE determines, based on the above method (the base station notifies through signaling or according to an agreed rule), that the first transmission in the SBFD symbol and the second transmission in the non-SBFD symbol have the same QCL characteristic of the DMRS antenna port, the UE assumes that there is the same QCL characteristic of the DMRS antenna port between the PDCCH and the PDCCH order, though they are in different types of symbols. In this way, the UE may receive and decode a PDSCH based on an SSB or CSI-RS by using the QCL characteristic. For example, the UE assumes that there is the QCL characteristic between a DMRS port of the PDCCH and a DMRS of the PDCCH order in aspects of Doppler shift, Doppler spread, average delay, delay spread, and spatial RX parameter.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD symbol, the UE forbids assuming that there is the same QCL characteristic of the DMRS antenna port between the PDCCH and the PDCCH order. For example, the UE forbids assuming that there is the QCL characteristic between the DMRS port of the PDCCH and the DMRS of the PDCCH order in aspects of Doppler shift, Doppler spread, average delay, delay spread, and spatial RX parameter. In other words, the UE believes that there is no same QCL characteristic of the DMRS antenna port between the PDCCH and the PDCCH order. In other words, the UE can assume that there is the same QCL characteristic of the DMRS antenna port between the PDCCH and the PDCCH order only when the PDCCH and the PDCCH order are all in the same type of symbol, otherwise, there is no same QCL characteristic of the DMRS antenna port between the PDCCH and the PDCCH order.

### Example 4

As shown in FIG. 7, a method for determining a quasi-co-location relationship in this example further includes: step S610, UE attempts to receive DCI scrambled by an RA-RNTI from a PDCCH in an SBFD symbol in response to a PRACH transmission triggered by a PDCCH order, where the PDCCH order triggers a contention-free random access process for SpCell, and the PDCCH order is transmitted in a non-SBFD symbol; step S620, the UE assumes that the PDCCH and the PDCCH order have a same quasi co-located characteristic of a DMRS antenna port in a case where the UE determines that a first transmission in the SBFD symbol and a second transmission in the non-SBFD symbol have the same quasi co-located characteristic of the DMRS antenna port; or step S630, the UE assumes that the PDCCH and the PDCCH order do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

In an implementation scene of Example 4: the UE can attempt to receive DCI in the PDCCH scrambled by the RA-RNTI in the SBFD symbol in response to one PRACH transmission triggered by the PDCCH order. The PDCCH order triggers one contention-free random access process for SpCell. The PDCCH order is transmitted in the non-SBFD symbol.

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD symbol, the UE assumes that there is the same QCL characteristic of the DMRS antenna port between the PDCCH and the PDCCH order, though they are in different types of symbols. In this way, the UE may receive and decode a PDSCH based on an SSB or CSI-RS by using the QCL characteristic. For example, the UE assumes that there is the QCL characteristic between a DMRS port of the PDCCH and a DMRS of the PDCCH order in aspects of Doppler shift, Doppler spread, average delay, delay spread, and spatial RX parameter.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD symbol, the UE forbids assuming that there is the same QCL characteristic of the DMRS antenna port between the PDCCH and the PDCCH order. For example, the UE forbids assuming that there is the QCL characteristic between the DMRS port of the PDCCH and the DMRS of the PDCCH order in aspects of Doppler shift, Doppler spread, average delay, delay spread, and spatial RX parameter. In other words, the UE believes that there is no same QCL characteristic of the DMRS antenna port between the PDCCH and the PDCCH order. In other words, the UE can assume that there is the same QCL characteristic of the DMRS antenna port between the PDCCH and the PDCCH order only when the PDCCH and the PDCCH order are all in the same type of symbol, otherwise, there is no same QCL characteristic of the DMRS antenna port between the PDCCH and the PDCCH order.

### Example 5

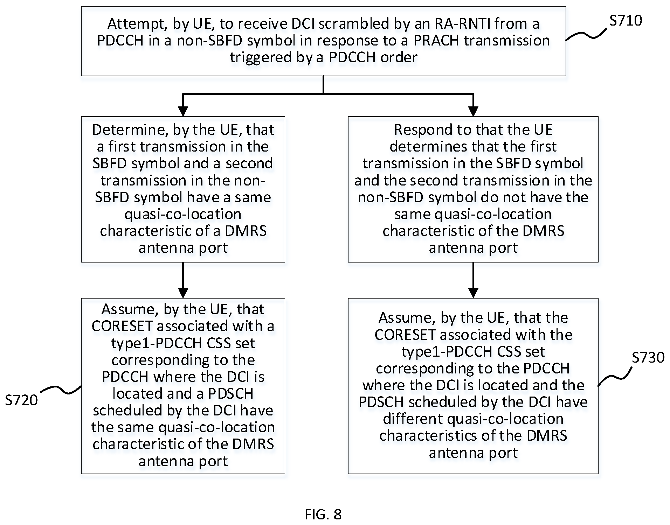

As shown in FIG. 8, a method for determining a quasi-co-location relationship in this example further includes: step S710, UE attempts to receive DCI scrambled by an RA-RNTI from a PDCCH in a non-SBFD symbol in response to a PRACH transmission triggered by a PDCCH order, where the PDCCH order triggers a contention-free random access process for a secondary cell, or CORESET of the PDCCH order is not associated with a physical cell ID of a serving cell of the UE; step S720, the UE assumes that the CORESET associated with a type1-PDCCH CSS set corresponding to the PDCCH where the DCI is located and a PDSCH scheduled by the DCI have a same quasi co-located characteristic of a DMRS antenna port in a case where the UE determines that a first transmission in an SBFD symbol and a second transmission in the non-SBFD symbol have the same quasi co-located characteristic of the DMRS antenna port; or step S730, the UE assumes that the CORESET associated with the type1-PDCCH CSS set corresponding to the PDCCH where the DCI is located and the PDSCH scheduled by the DCI have different quasi co-located characteristics of the DMRS antenna port in a case where the UE determines that the first transmission in the SBFD symbol and the second transmission in the non-SBFD symbol have different quasi co-located characteristics of the DMRS antenna port.

The PDSCH is in the SBFD symbol, and the CORESET is in the non-SBFD symbol.

In an implementation scene of Example 5: the UE can attempt to receive DCI scrambled by the RA-RNTI from the PDCCH in the non-SBFD symbol in response to one PRACH transmission triggered by the PDCCH order. The PDCCH order triggers one contention-free random access process for the secondary cell, or the PDCCH order is from a cell except the serving cell (namely, the CORESET of the PDCCH order is not associated with the physical cell ID of the serving cell).

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD symbol, the UE assumes that there is the same QCL characteristic of the DMRS antenna port between the CORESET associated with the type1-PDCCH CSS set where the PDCCH where the DCI is located is located and the PDSCH scheduled by the DCI. The CORESET is located in the non-SBFD symbol, and the PDSCH is located in the SBFD symbol. For example, the UE assumes that there is the QCL characteristic between a DMRS port of the CORESET and a DMRS port of the PDSCH in aspects of Doppler shift, Doppler spread, average delay, delay spread, and spatial RX parameter.

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD symbol, the UE forbids assuming that there is the same QCL characteristic of the DMRS antenna port between the CORESET associated with the type1-PDCCH CSS set where the PDCCH where the DCI is located is located and the PDSCH scheduled by the DCI. The CORESET is located in the non-SBFD symbol, and the PDSCH is located in the SBFD symbol. For example, the UE forbids assuming that there is the QCL characteristic between the DMRS port of the CORESET and the DMRS port of the PDSCH in aspects of Doppler shift, Doppler spread, average delay, delay spread, and spatial RX parameter. In other words, the UE believes that there is no same QCL characteristic of the DMRS antenna port between the CORESET and the PDSCH. In other words, the UE can assume that there is the same QCL characteristic of the DMRS antenna port between the CORESET and the PDSCH only when the CORESET and the PDSCH are both in the same type of symbol, otherwise, there is no same QCL characteristic of the DMRS antenna port between the CORESET and the PDSCH.

### Example 6

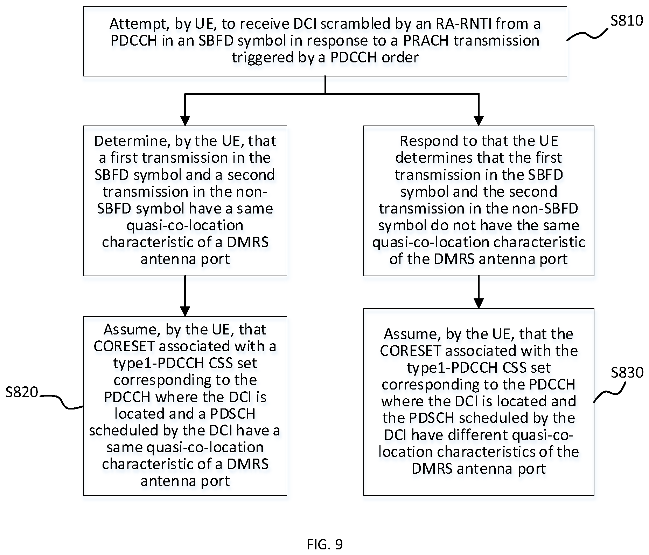

As shown in FIG. 9, a method for determining a quasi-co-location relationship in this example further includes: step S810, UE attempts to receive DCI scrambled by an RA-RNTI from a PDCCH in an SBFD symbol in response to a PRACH transmission triggered by a PDCCH order, where the PDCCH order triggers a contention-free random access process for a secondary cell, or CORESET of the PDCCH order is not associated with a physical cell ID of a serving cell of the UE; step S820, the UE assumes that the CORESET associated with a type1-PDCCH CSS set corresponding to the PDCCH where the DCI is located and a PDSCH scheduled by the DCI have a same quasi co-located characteristic of a DMRS antenna port in a case where the UE determines that a first transmission in the SBFD symbol and a second transmission in a non-SBFD symbol have the same quasi co-located characteristic of the DMRS antenna port; or step S830, the UE assumes that the CORESET associated with the type1-PDCCH CSS set corresponding to the PDCCH where the DCI is located and the PDSCH scheduled by the DCI have different quasi co-located characteristics of the DMRS antenna port in a case where the UE determines that the first transmission in the SBFD symbol and the second transmission in the non-SBFD symbol have the different quasi co-located characteristics of the DMRS antenna port.

The PDSCH is in the non-SBFD symbol, and the CORESET is in the SBFD symbol.

In an implementation scene of Example 6: the UE can attempt to receive DCI scrambled by the RA-RNTI from the PDCCH in the SBFD symbol in response to one PRACH transmission triggered by the PDCCH order. The PDCCH order triggers one contention-free random access process for the secondary cell, or the PDCCH order is from a cell except the serving cell (namely, the CORESET of the PDCCH order is not associated with the physical cell ID of the serving cell).

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD symbol, the UE assumes that there is the same QCL characteristic of the DMRS antenna port between the CORESET associated with the type1-PDCCH CSS set where the PDCCH where the DCI is located is located and the PDSCH scheduled by the DCI. The CORESET is located in the SBFD symbol, and the PDSCH is located in the non-SBFD symbol. For example, the UE assumes that there is the QCL characteristic between a DMRS port of the CORESET and a DMRS port of the PDSCH in aspects of Doppler shift, Doppler spread, average delay, delay spread, and spatial RX parameter.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD symbol, the UE forbids assuming that the CORESET associated with the type1-PDCCH CSS set where the PDCCH where the DCI is located is located and the PDSCH scheduled by the DCI are the QCL characteristic of the DMRS antenna port. The CORESET is located in the SBFD symbol. The PDSCH is located in the non-SBFD symbol. For example, the UE forbids assuming that there is the QCL characteristic between the DMRS port of the CORESET and the DMRS port of the PDSCH in aspects of Doppler shift, Doppler spread, average delay, delay spread, and spatial RX parameter. In other words, the UE believes that the CORESET and the PDSCH do not have the same QCL characteristic of the DMRS antenna port. In other words, the UE can assume that the CORESET and the PDSCH have the QCL characteristic of the DMRS antenna port only when the CORESET and the PDSCH are both in the same type of symbol, otherwise, the CORESET and the PDSCH have the QCL characteristic of the DMRS antenna port.

### Example 7

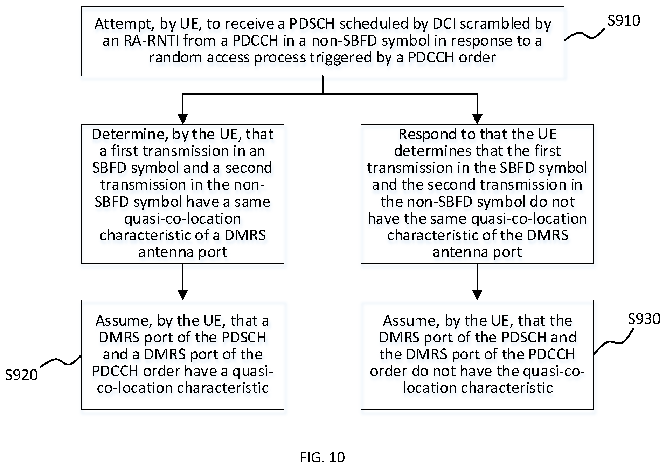

As shown in FIG. 10, a method for determining a quasi-co-location relationship in this example further includes: step S910, UE attempts to receive a PDSCH scheduled by DCI and scrambled by an RA-RNTI from a PDCCH in a non-SBFD symbol in response to a random access process triggered by a PDCCH order, where the PDCCH order triggers a contention-free random access process for SpCell, and the PDCCH order is in an SBFD symbol; step S920, the UE assumes that a DMRS port of the PDSCH and a DMRS port of the PDCCH order have a quasi co-located characteristic in a case where the UE determines that a first transmission in the SBFD symbol and a second transmission in the non-SBFD symbol have the same quasi co-located characteristic of the DMRS antenna port; or step S930, the UE assumes that the DMRS port of the PDSCH and the DMRS port of the PDCCH order do not have the quasi co-located characteristic in a case where the UE determines that the first transmission in the SBFD symbol and the second transmission in the non-SBFD symbol do not have the same quasi co-located characteristic of the DMRS antenna port.

In an implementation scene of Example 7: the UE receives the PDSCH scheduled by the DCI in the PDCCH and scrambled by the RA-RNTI in the non-SBFD symbol in response to one random access process triggered by the PDCCH order. The PDCCH order triggers one contention-free random access process for SpCell. The PDCCH order is transmitted in the SBFD symbol.

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD symbol, the UE assumes that there is the QCL characteristic between the DMRS port of the PDSCH and the DMRS port of the PDCCH order in aspects of Doppler shift, Doppler spread, average delay, delay spread, and spatial RX parameter, though they are in different types of symbols. In this way, the UE may receive and decode the PDSCH based on an SSB or CSI-RS by using the QCL characteristic.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD symbol, the UE forbids assuming that there is the QCL characteristic between the DMRS port of the PDSCH and the DMRS port of the PDCCH order in aspects of Doppler shift, Doppler spread, average delay, delay spread, and spatial RX parameter. In other words, the UE believes that there is no same QCL characteristic of the DMRS antenna port between the PDSCH and the PDCCH order. In other words, the UE can assume that there is the same QCL characteristic of the DMRS antenna port between the PDSCH and the PDCCH order only when the PDSCH and the PDCCH order are both in the same type of symbol, otherwise, there is no same QCL characteristic of the DMRS antenna port between the PDSCH and the PDCCH order.

### Example 8

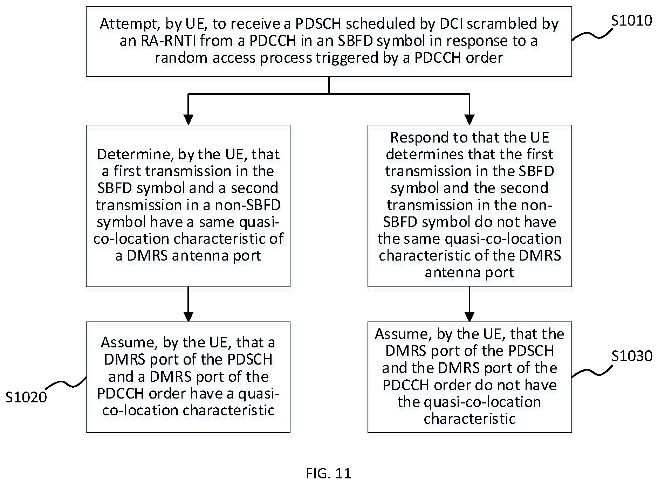

As shown in FIG. 11, a method for determining a quasi-co-location relationship in this example further includes: step S1010, UE attempts to receive a PDSCH scheduled by DCI and scrambled by an RA-RNTI from a PDCCH in an SBFD symbol in response to a random access process triggered by a PDCCH order, where the PDCCH order triggers a contention-free random access process for SpCell, and the PDCCH order is in a non-SBFD symbol; step S1020, the UE assumes that a DMRS port of the PDSCH and a DMRS port of the PDCCH order have a quasi co-located characteristic in a case where the UE determines that a first transmission in the SBFD symbol and a second transmission in the non-SBFD symbol have the same quasi co-located characteristic of the DMRS antenna port; or step S1030, the UE assumes that the DMRS port of the PDSCH and the DMRS port of the PDCCH order do not have the quasi co-located characteristic in a case where the UE determines that the first transmission in the SBFD symbol and the second transmission in the non-SBFD symbol do not have the same quasi co-located characteristic of the DMRS antenna port.

In an implementation scene of Example 8: the UE receives the PDSCH scheduled by the DCI in the PDCCH and scrambled by the RA-RNTI in the SBFD symbol in response to one random access process triggered by the PDCCH order. The PDCCH order triggers one contention-free random access process for SpCell. The PDCCH order is transmitted in the non-SBFD symbol.

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD symbol, the UE assumes that there is the QCL characteristic between the DMRS port of the PDSCH and the DMRS port of the PDCCH order in aspects of Doppler shift, Doppler spread, average delay, delay spread, and spatial RX parameter, though they are in different types of symbols. In this way, the UE may receive and decode the PDSCH based on an SSB or CSI-RS by using the QCL characteristic.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD symbol, the UE forbids assuming that there is the QCL characteristic between the DMRS port of the PDSCH and the DMRS port of the PDCCH order in aspects of Doppler shift, Doppler spread, average delay, delay spread, and spatial RX parameter. In other words, the UE believes that there is no same QCL characteristic of the DMRS antenna port between the PDSCH and the PDCCH order. In other words, the UE can assume that there is the same QCL characteristic of the DMRS antenna port between the PDSCH and the PDCCH order only when the PDSCH and the PDCCH order are both in the same type of symbol, otherwise, there is no same QCL characteristic of the DMRS antenna port between the PDSCH and the PDCCH order.

### Example 9

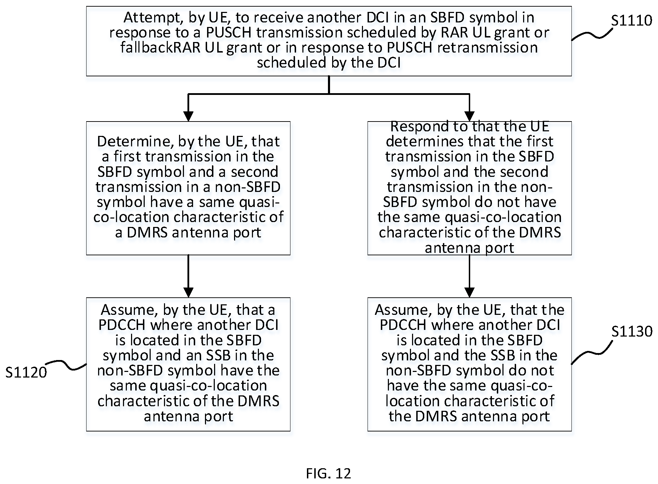

As shown in FIG. 12, a method for determining a quasi-co-location relationship in this example further includes: step S1110, UE attempts to receive another DCI in an SBFD symbol in response to a PUSCH transmission scheduled by RAR UL grant or fallbackRAR UL grant or in response to PUSCH retransmission scheduled by the DCI, where the DCI is scrambled by a TC-RNTI and the TC-RNTI is provided in a corresponding RAR message, and the PUSCH transmission or the PUSCH retransmission is associated with a PRACH transmission sent (previously) by the UE; step S1120, the UE assumes that a PDCCH where the another DCI is located in the SBFD symbol and an SSB in a non-SBFD symbol have the same quasi co-located characteristic of the DMRS antenna port in a case where the UE determines that a first transmission in the SBFD symbol and a second transmission in the non-SBFD symbol have the same quasi co-located characteristic of the DMRS antenna port; or step S1130, the UE assumes that the PDCCH where the another DCI is located in the SBFD symbol and the SSB in the non-SBFD symbol do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port; where the SSB is associated with the PRACH transmission.

In an implementation scene of Example 9: the UE detects and receives one DCI format in the SBFD symbol in response to one PUSCH transmission scheduled by RAR UL grant or fallbackRAR UL grant or in response to one PUSCH retransmission scheduled by the DCI. CRC of the DCI is scrambled by the TC-RNTI, and the TC-RNTI is provided in the corresponding RAR message. The UE previously sends one PRACH transmission, and the PUSCH transmission or the PUSCH retransmission is associated with the PRACH transmission.

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD symbol, the UE assumes that there is the same QCL characteristic of the DMRS antenna port between a PDCCH where the detected and received DCI format is located and the SSB in the non-SBFD symbol. The SSB is associated with the PRACH transmission. For example, the UE assumes that there is the QCL characteristic between a DMRS antenna port of the PDCCH where the detected and received DCI format is located and a DMRS antenna port of the SSB in aspects of Doppler shift, Doppler spread, average delay, delay spread, and spatial RX parameter.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD symbol, the UE forbids assuming that there is the same QCL characteristic of the DMRS antenna port between the PDCCH where the detected and received DCI format is located and the SSB in the non-SBFD symbol. The SSB is associated with the PRACH transmission. For example, the UE forbids assuming that there is the QCL characteristic between the DMRS antenna port of the PDCCH where the detected and received DCI format is located and the DMRS antenna port of the SSB in aspects of Doppler shift, Doppler spread, average delay, delay spread, and spatial RX parameter. In other words, the UE believes that there is no same QCL characteristic of the DMRS antenna port between the PDCCH where the detected and received DCI format is located and the SSB in the non-SBFD symbol. In other words, the UE can assume that there is the same QCL characteristic of the DMRS antenna port between the PDCCH where the DCI format is located and the SSB only when the PDCCH where the DCI format is located and the SSB are both in the same type of symbol, otherwise, there is no same QCL characteristic of the DMRS antenna port between the PDCCH where the DCI format is located and the SSB.

### Example 10

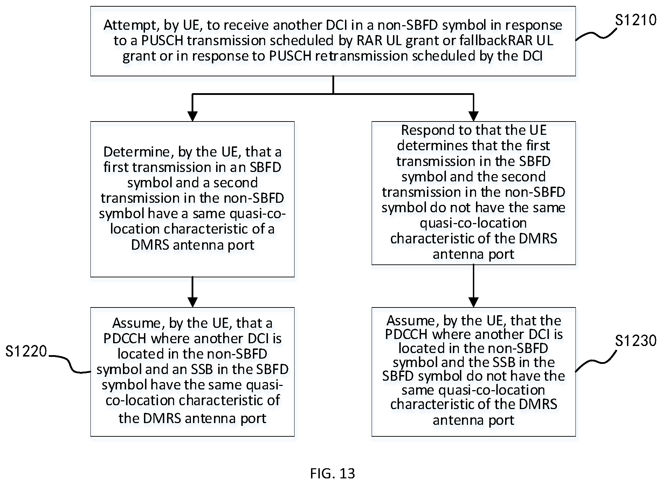

As shown in FIG. 13, a method for determining a quasi-co-location relationship in this example further includes: step S1210, UE attempts to receive another DCI in a non-SBFD symbol in response to a PUSCH transmission scheduled by RAR UL grant or fallbackRAR UL grant or in response to PUSCH retransmission scheduled by the DCI, where the DCI is scrambled by a TC-RNTI and the TC-RNTI is provided in a corresponding RAR message, and the PUSCH transmission or the PUSCH retransmission is associated with a PRACH transmission sent (previously) by the UE; step S1220, the UE assumes that a PDCCH where the another DCI is located in the non-SBFD symbol and an SSB in the SBFD symbol have the same quasi co-located characteristic of the DMRS antenna port in a case where the UE determines that a first transmission in the SBFD symbol and a second transmission in the non-SBFD symbol have the same quasi co-located characteristic of the DMRS antenna port; or step S1230, the UE assumes that the PDCCH where the another DCI is located in the non-SBFD symbol and the SSB in the SBFD symbol do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port; where the SSB is associated with the PRACH transmission.

In an implementation scene of Example 10: the UE detects and receives one DCI format in the non-SBFD symbol in response to one PUSCH transmission scheduled by RAR UL grant or fallbackRAR UL grant or in response to one PUSCH retransmission scheduled by the DCI. CRC of the DCI is scrambled by the TC-RNTI, and the TC-RNTI is provided in the corresponding RAR message. The UE previously sends one PRACH transmission, and the PUSCH transmission or the PUSCH retransmission is associated with the PRACH transmission.

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD symbol, the UE assumes that there is the same QCL characteristic of the DMRS antenna port between the PDCCH where the detected and received DCI format is located and the SSB in the SBFD symbol. The SSB is associated with the PRACH transmission. For example, the UE assumes that there is the QCL characteristic between a DMRS antenna port of the PDCCH where the detected and received DCI format is located and a DMRS antenna port of the SSB in aspects of Doppler shift, Doppler spread, average delay, delay spread, and spatial RX parameter.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD symbol, the UE forbids assuming that there is the same QCL characteristic of the DMRS antenna port between the PDCCH where the detected and received DCI format is located and the SSB in the SBFD symbol. The SSB is associated with the PRACH transmission. For example, the UE forbids assuming that there is the QCL characteristic between a DMRS antenna port of the PDCCH where the detected and received DCI format is located and a DMRS antenna port of the SSB in aspects of Doppler shift, Doppler spread, average delay, delay spread, and spatial RX parameter. In other words, the UE believes that there is no same QCL characteristic of the DMRS antenna port between the PDCCH where the detected and received DCI format is located and the SSB in the SBFD symbol. In other words, the UE can assume that there is the same QCL characteristic of the DMRS antenna port between the PDCCH where the DCI format is located and the SSB only when the PDCCH where the DCI format is located and the SSB are both in the same type of symbol, otherwise, there is no same QCL characteristic of the DMRS antenna port between the PDCCH where the DCI format is located and the SSB.

### Example 11

An associated relationship is configured between an occasion of a PRACH transmission and an SSB, an occasion of one PRACH transmission is associated with SSBs based on different types of symbols, or one SSB is associated with occasions of PRACH transmissions based on different types of symbols, and the different types of symbols include the SBFD symbol and the non-SBFD symbol.

A method for determining a quasi-co-location relationship in this example further includes: determining, by UE, that the associated relationship is available in a case where the UE determines that a first transmission in the SBFD symbol and a second transmission in the non-SBFD symbol have a same quasi co-located characteristic of a DMRS antenna port; or determining, by UE, that the associated relationship is not available in a case where the UE determines that the first transmission in the SBFD symbol and the second transmission in the non-SBFD symbol do not have the same quasi co-located characteristic of the DMRS antenna port; or expecting, by the UE, to be respectively configured with occasions of PRACH transmissions for the SBFD symbol and the non-SBFD symbol in a case where the UE determines that the first transmission in the SBFD symbol and the second transmission in the non-SBFD symbol do not have the same quasi co-located characteristic of the DMRS antenna port; or expecting, by the UE, that the associated relationship can be configured between the SSB and the occasion of the PRACH transmission in the same type of symbol and the associated relationship is not configured between the SSBs and the occasions of the PRACH transmissions in the different types of symbols in a case where the UE determines that the first transmission in the SBFD symbol and the second transmission in the non-SBFD symbol do not have the same quasi co-located characteristic of the DMRS antenna port.

In an implementation scene of Example 11: the associated relationship is configured between the occasion of one PRACH transmission and the SSB, for example, one or more PRACH occasions are associated with one or more SSB transmissions based on configuration information of a base station. In this case, according to the associated relationship, the UE receives one SSB and can determine that one PRACH transmission or one repetitive PRACH transmission is sent at one PRACH occasion from the PRACH occasions associated with the SSB. One PRACH occasion is associated with the SSBs in different types of symbols, or one SSB is associated with the PRACH occasions in the different types of symbols. The associated relationship can be used for determining a beam relationship between the SSB and the PRACH.

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD symbol, the UE assumes that the associated relationship between the SSB and the PRACH occasion is available/valid, though they are located in the different types of symbols; and otherwise, the UE assumes that the associated relationship between the SSB and the PRACH occasion is not completely available, and further rule optimization is needed, for example, the UE assumes that the SSB and the PRACH occasion can be associated or the associated relationship between them is available only when the SSB and the PRACH occasion are in the same type of symbol. In other words, a symbol type where the SSB is located is different from a symbol type of the PRACH occasion associated therewith, so the associated relationship is not available. In other words, the base station and the UE agree that in a case where the transmissions in the different types of symbols have the QCL characteristic, the UE is supposed to assume that the SSB and the PRACH can be associated, though the SSB and the PRACH are located in the different types of symbols; and otherwise, the UE is not supposed to assume that the SSB and the PRACH can be associated, in a case where the SSB and the PRACH are located in the different types of symbols.

In the above scene, further, in a case where the UE determines, based on the above method (the base station notifies through signaling or according to an agreed rule), that the first transmission in the SBFD symbol and the second transmission in the non-SBFD symbol do not have the same QCL characteristic of the DMRS antenna port, the base station is supposed to configure an independent PRACH occasion for the SBFD symbol and configure an independent associated relationship between the SSB and the PRACH occasion in the SBFD symbol. One SSB should not be configured to be associated simultaneously with the PRACH occasions in the different types of symbols. Or, in a case where the base station configures that the same SSB is associated with the PRACH occasions in the different types of symbols, or the same PRACH occasion is associated with the SSBs in the different types of symbols, the UE considers that there is the same QCL characteristic of the DMRS antenna port between the different transmissions sent by the base station in the different symbol types. This is because the base station configures that the same SSB is associated with the PRACH occasions in the different types of symbols, which means that uplink transmissions in the different types of symbols use the same antenna panel and/or element. Or this is because the base station configures that the same PRACH is associated with the SSB occasions in the different types of symbols, which means that downlink transmissions in the different types of symbols use the same antenna panel and/or element.

Some examples are given below for describing the method for determining the quasi-co-location relationship for related transmissions after the random access.

### Example 12

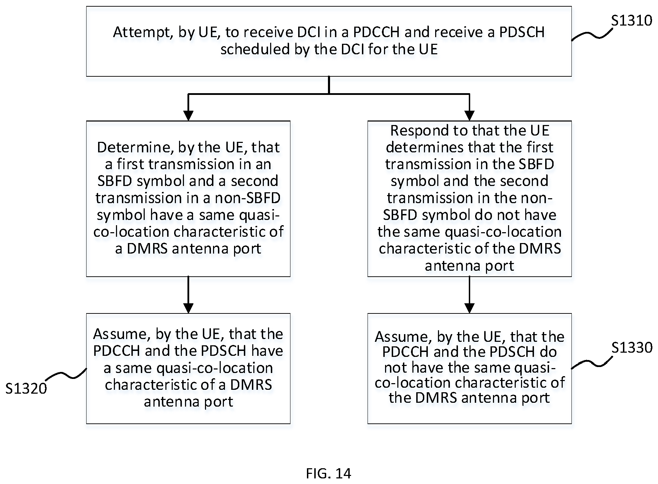

As shown in FIG. 14, after establishing RRC connection, a method for determining a quasi-co-location relationship in this example further includes: step S1310, UE attempts to receive DCI in a PDCCH and attempts to receive a PDSCH scheduled by the DCI for the UE, where one of the PDCCH and the PDSCH is transmitted in an SBFD symbol, and the other is transmitted in a non-SBFD symbol; step S1320, the UE assumes that the PDCCH and the PDSCH have a same quasi co-located characteristic of a DMRS antenna port in a case where the UE determines that a first transmission in the SBFD symbol and a second transmission in the non-SBFD symbol have the same quasi co-located characteristic of the DMRS antenna port; or step S1330, the UE assumes that the PDCCH and the PDSCH do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

In an implementation scene of Example 12: the UE detects and receives one DCI from one PDCCH, and the DCI schedules one PDSCH for the UE. The PDCCH and the PDSCH are in different types of symbols (namely, the SBFD symbol and the non-SBFD symbol).

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD, the UE can assume that there is the same QCL characteristic of the DMRS antenna port between the PDCCH and the PDSCH. For example, there is the QCL characteristic between a DMRS antenna port of the PDCCH and a DMRS antenna port of the PDSCH in aspects of Doppler shift, Doppler spread, average delay, delay spread, and spatial RX parameter.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD, the UE cannot assume that there is the same QCL characteristic of the DMRS antenna port between the PDCCH and the PDSCH. For example, there is no QCL characteristic between the DMRS antenna port of the PDCCH and the DMRS antenna port of the PDSCH in aspects of Doppler shift, Doppler spread, average delay, delay spread, and spatial RX parameter. In other words, the UE believes that there is no same QCL characteristic of the DMRS antenna port between the PDCCH and the PDSCH. In other words, the UE can assume that there is the QCL characteristic of the DMRS antenna port between the PDCCH and the PDSCH only when the PDCCH and the PDSCH are both in the same type of symbol, otherwise, there is no QCL characteristic of the DMRS antenna port between the PDCCH and the PDSCH.

### Example 13

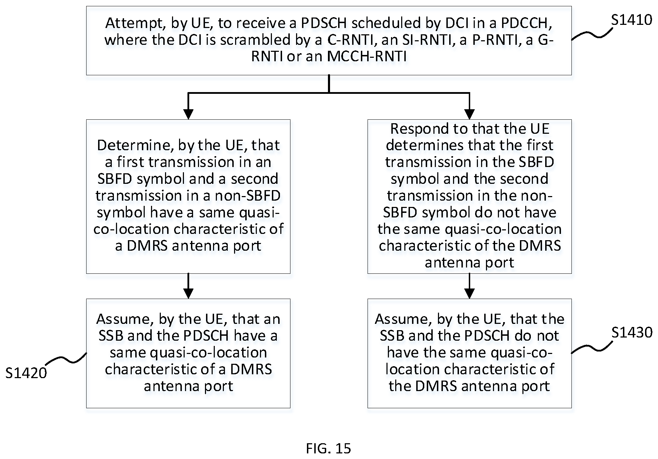

As shown in FIG. 15, after establishing RRC connection, a method for determining a quasi-co-location relationship in this example further includes: step S1410, UE attempts to receive a PDSCH scheduled by DCI in a PDCCH, where the DCI is scrambled by a C-RNTI, an SI-RNTI, a P-RNTI, a G-RNTI or an MCCH-RNTI; step S1420, the UE assumes that the SSB and the PDSCH have a same quasi co-located characteristic of a DMRS antenna port in a case where the UE determines that a first transmission in an SBFD symbol and a second transmission in a non-SBFD symbol have the same quasi co-located characteristic of the DMRS antenna port; or step S1430, the UE assumes that the SSB and the PDSCH do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port; where the SSB is one or more SSBs associated with an occasion of sending a PRACH transmission by the UE in a random access process, the SSB and the PDSCH are respectively in the different types of symbols, and the different types of symbols include the SBFD symbol and the non-SBFD symbol.

In an implementation scene of Example 13: the UE receives one PDSCH scheduled by the DCI in the PDCCH scrambled by the C-RNTI, the SI-RNTI, the P-RNTI, the G-RNTI or the MCCH-RNTI, and the UE determines/uses one or more SSB(s) in the random access process. The SSB and the PDSCH are in the different types of symbols.

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD, the UE assumes that there is the same QCL characteristic of the DMRS antenna port between the PDSCH and the SSB, and otherwise, the UE assumes that there is no same QCL characteristic of the DMRS antenna port between the PDSCH and the SSB.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD, the UE forbids assuming that there is the same QCL characteristic of the DMRS antenna port between the PDSCH and the SSB, and otherwise, the UE can assume that there is the same QCL characteristic of the DMRS antenna port between the PDSCH and the SSB. In other words, the UE can assume that there is the same QCL characteristic of the DMRS antenna port between the PDSCH and the SSB only when the PDSCH and the SSB are both in the same type of symbol, and otherwise, there is no same QCL characteristic of the DMRS antenna port between the PDSCH and the SSB.

### Example 14

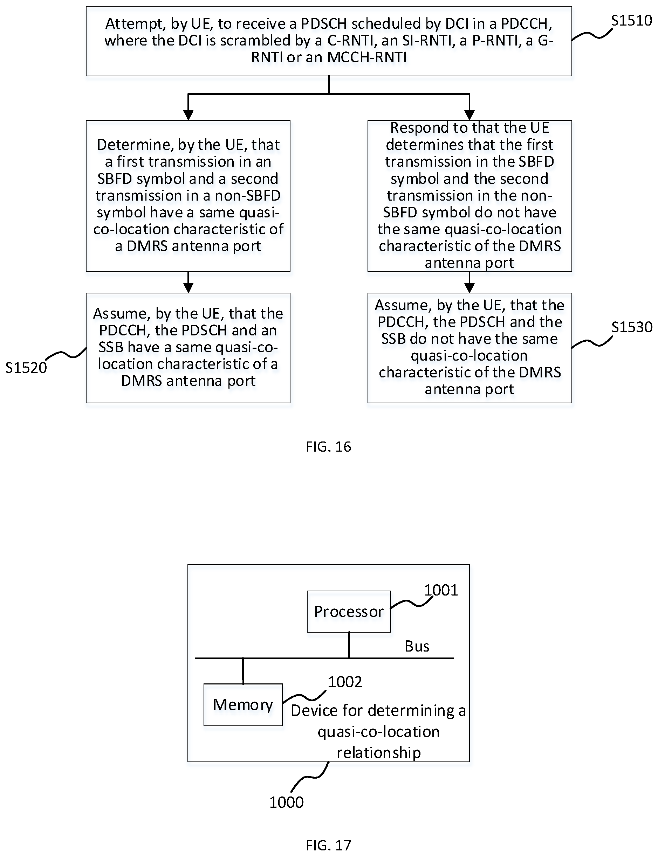

As shown in FIG. 16, after establishing RRC connection, a method for determining a quasi-co-location relationship in this example further includes: step S1510, UE attempts to receive a PDSCH scheduled by DCI in a PDCCH, where the DCI is scrambled by a C-RNTI, an SI-RNTI, a P-RNTI, a G-RNTI or an MCCH-RNTI; step S1520, the UE assumes that the PDCCH, the PDSCH and an SSB have a same quasi co-located characteristic of a DMRS antenna port in a case where the UE determines that a first transmission in an SBFD symbol and a second transmission in a non-SBFD symbol have the same quasi co-located characteristic of the DMRS antenna port; or step S1530, the UE assumes that the PDCCH, the PDSCH and the SSB do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port; where the SSB is one or more SSBs associated with an occasion of sending a PRACH transmission by the UE in a random access process, and not all of the PDCCH, the PDSCH and the SSB are in the SBFD symbol or the non-SBFD symbol.

In an implementation scene of Example 14: the UE receives one PDSCH scheduled by the DCI in the PDCCH scrambled by the C-RNTI, the SI-RNTI, the P-RNTI, the G-RNTI or the MCCH-RNTI, where one or more SSB(s) associated with the occasion of sending the PRACH transmission by the UE in the random access process. The PDCCH and the PDSCH are in the different types of symbols, the SSB and the PDSCH are in the different types of symbols, the PDCCH and the SSB are in the same type of symbol, or not all of the SSB, the PDSCH and the PDCCH are in the same type of symbol.

In the above scene, further, in a case where the UE determines, based on the above method (the base station notifies through signaling or according to an agreed rule), that there is the same QCL characteristic of the DMRS antenna port between the first transmission in the SBFD symbol and the second transmission in the non-SBFD, the UE assumes that there is the same QCL characteristic of the DMRS antenna port between the PDCCH, PDSCH and the SSB, and otherwise, the UE assumes that there is the same QCL characteristic of the DMRS antenna port between the PDCCH and the SSB, but the UE assumes that there is no same QCL characteristic of the DMRS antenna port between the PDCCH and the PDSCH, and the UE assumes that there is no same QCL characteristic of the DMRS antenna port between the PDSCH and the SSB.

In the above scene, further, in a case where the UE determines, based on the above method (the base station notifies through signaling or according to an agreed rule), that there is no same QCL characteristic of the DMRS antenna port between the first transmission in the SBFD symbol and the second transmission in the non-SBFD, the UE believes, in a case where the above downlink transmissions (namely, the above PDCCH, PDSCH and SSB) are in the same type of symbol, that there is the same QCL characteristic of the DMRS antenna port between them, and otherwise, the UE cannot assume that there is the same QCL characteristic of the DMRS antenna port between them, which needs to be determined according to related configuration signaling of the QCL characteristic. In other words, the UE can assume that there is the QCL characteristic of the DMRS antenna port between them only when the PDCCH, the PDSCH and the SSB are all in the same type of symbol, and otherwise, there is no QCL characteristic of the DMRS antenna port between them.

### Example 15

In this example, a rule agreed on by UE and a base station includes at least one of the following: the same quasi co-located characteristic of the DMRS antenna port exists between a plurality of SSBs received by the UE; downlink transmissions based on different types of symbols of the UE in a random access process have the same quasi co-located characteristic of the DMRS antenna port; or the SSB received by the UE and the downlink transmission have the same quasi co-located characteristic of the DMRS antenna port; where the plurality of SSBs at least include one SSB in the non-SBFD symbol, and the SSB in the non-SBFD symbol is associated with an occasion of a PRACH transmission in the SBFD symbol; and the downlink transmission includes a PDSCH, a PDCCH and a CSI-RS.

In an implementation scene of Example 15: the UE receives one or more SSB(s), and intends to determine sending the PRACH transmission in one PRACH occasion according to an associated relationship between the SSB(s) and the PRACH occasion. The UE determines, based on the above method (the base station notifies through signaling or according to an agreed rule), that there is the same QCL characteristic of the DMRS antenna port between the first transmission in the SBFD symbol and the second transmission in the non-SBFD symbol, and the UE supports sending a transmission related with the random access in the SBFD symbol/slot.

In other words, in an implementation scene, the base station notifies the UE that the DL transmission in the SBFD symbol and the DL transmission in the non-SBFD symbol use the same antenna panel/element, namely, the base station side believes that there is the same QCL characteristic of the DMRS antenna port between the DL transmission in the SBFD symbol and the DL transmission in the non-SBFD symbol, so: the base station configures the following associated relationship between the SSB(s) and the PRACH occasion: the SSB in the SBFD symbol can be associated with the PRACH occasion in the non-SBFD symbol; the SSB in the non-SBFD symbol can be associated with the PRACH occasion in the SBFD symbol; the PRACH occasion in the SBFD symbol and the PRACH occasion in the non-SBFD symbol can be associated with the SSB in the SBFD symbol (or the SSB in the non-SBFD symbol) at the same time; the PRACH occasion in the SBFD symbol and the PRACH occasion in the non-SBFD symbol can be configured in one PRACH occasion group; the SSB in the SBFD symbol and the SSB in the non-SBFD symbol can be associated with the PRACH occasion in the SBFD symbol (or the PRACH occasion in the non-SBFD symbol) at the same time; and the SSB in the SBFD symbol and the SSB in the non-SBFD symbol can be configured in one SSB group.

Correspondingly, the UE side supports by default the above configuration of the base station side. Or, the UE side detects the above configuration of the base station, and the UE considers that there is the same QCL characteristic of the DMRS antenna port between the DL transmission in the SBFD symbol and the DL transmission in the non-SBFD symbol.

In the above scene: further, in a case where the UE determines sending the PRACH transmission at the PRACH occasion in the SBFD symbol, and one or more SSB(s) with which the PRACH occasion is configured to be associated include at least SSB in the non-SBFD symbol, the UE is considered (by the base station) that the related transmissions in the random access process in the different types of symbols (the SBFD symbol and the non-SBFD symbol) can be supported. The related transmissions include: the PRACH transmission, the PRACH transmission+PUSCH transmission (a first step in a Type-2 random access procedure, namely, the PRACH transmission and the PUSCH transmission are sent successively, see TS38.213 for details), a PDSCH corresponding to the PRACH transmission and scheduled by DCI scrambled by an RA-RNTI, a PDSCH scheduled by DCI scrambled by an MsgB-RNTI, a PUSCH corresponding to the PDSCH and scheduled by RAR UL grant, a PDSCH corresponding to the PUSCH and scheduled by DCI scrambled by a TC-RNTI, and an HARQ-ACK PUCCH corresponding to the PDSCH scheduled by the DCI scrambled by the TC-RNTI.

The PRACH transmission is sent in the SBFD symbol, the PDSCH corresponding to the PRACH transmission and scheduled by the DCI scrambled by the RA-RNTI is sent in the non-SBFD symbol, the PUSCH corresponding to the PDSCH and scheduled by RAR UL grant is sent in the non-SBFD symbol, the PDSCH corresponding to the PUSCH and scheduled by DCI scrambled by the TC-RNTI is sent in the SBFD symbol, and the HARQ-ACK PUCCH corresponding to the PDSCH scheduled by the DCI scrambled by the TC-RNTI is sent in the non-SBFD symbol. Further, the UE can assume that there is the same QCL characteristic of the DMRS antenna port between the downlink transmissions in the random access process. The UE can assume that there is the same QCL characteristic of the DMRS antenna port between the downlink transmissions in the random access process and the SSB(s) associated with the PRACH occasion where the PRACH transmission is located. In other words, in the above scene, the UE determines using one PRACH occasion for performing the PRACH transmission, at least one of the SSB(s) associated with the PRACH occasion and the PRACH transmission are in the different types of symbols, so the base station and the UE agree on at least one of the following: there is the same QCL characteristic of the DMRS antenna port between the SSB(s) (SSB(s) are allowed in the different types of symbols), the related transmissions of the UE in the random access process can be respectively performed in the different types of symbols, there is the same QCL characteristic of the DMRS antenna port between the downlink transmissions of the UE in the different types of symbols, and there is the same QCL characteristic of the DMRS antenna port between the downlink transmissions in the different types of symbols and the SSB(s). The related transmissions in the random access process include uplink and downlink, for example, the PRACH transmission, the PRACH transmission and PUSCH transmission, the PDSCH scheduled by the DCI scrambled by the RA-RNTI, the PDSCH scheduled by the DCI scrambled by the MsgB-RNTI, the PUSCH scheduled by RAR UL grant, the PDSCH scheduled by the TC-RNTI, and the HARQ-ACK PUCCH of the PDSCH scheduled by the TC-RNTI.

Further, based on the above method, after the UE accesses to a network, for example, the UE is switched to an RRC connected state, the base station and the UE may still assume that there is the same QCL characteristic of the DMRS antenna port between the downlink transmissions of the UE in the different types of symbols (including the PDSCH, the PDCCH and the CSI-RS), and there is the same QCL characteristic of the DMRS antenna port between the downlink transmissions (including the PDSCH, the PDCCH and the CSI-RS) and the SSB(s). The SSB(s) are associated with the PRACH occasion used when the UE successfully accesses to the network. Certainly, in a case where the base station further independently configures the QCL characteristic of the DMRS antenna port for the downlink transmissions and the SSB(s), a new QCL characteristic is performed.

To sum up, in a related system, the base station uses the same antenna panel and element for performing the downlink transmissions including a control channel, a data channel and a common channel, so these channels can be configured or assumed to have the same QCL characteristic of the DMRS antenna port. However, after the SBFD operation manner is supported, the antenna panels and/or elements used when the base station performs the downlink transmission in (a DL sub-band) in the SBFD symbol/slot and performs the downlink transmission in (a DL BWP) in the non-SBFD symbol/slot may be different (or may be the same), which may possibly result in that the downlink transmissions in the two types of symbols do not have the same QCL characteristic of the DMRS antenna port, for example, a difference of the different antenna panels or different elements of the same antenna panel in physical properties may result in that the transmissions based on them do not have the same QCL characteristic of the DMRS antenna port. The DL sub-band and a UL sub-band of the SBFD operation are configured in the DL BWP.

Thus, in combination with the above features of the SBFD operation, the UE needs to know the antenna panel and/or element used for performing the transmissions in the SBFD symbol and the non-SBFD symbol when the base station implements the SBFD operation, and in general, the different transmissions performed by using the same panel and/or element may be regarded as having the same QCL characteristic of the DMRS antenna port. Or certainly, the base station directly notifies of whether there is the same QCL characteristic of the DMRS antenna port between the transmissions performed in the SBFD symbol and the non-SBFD symbol. In this case, though the base station actually uses the different antenna panels or elements for performing the transmissions in the different symbol types, in a case where the QCL characteristic may still be achieved between the antenna panels or elements, the base station may still notify the UE of or agree with the UE on the same QCL characteristic of the DMRS antenna port existing between the transmissions. Thus, the base station notifies the UE of whether there is the same QCL characteristic of the DMRS antenna port between the different transmissions in the SBFD symbol and the non-SBFD symbol, which may be applicable to more implementation manners and more flexible. This notification may adopt system broadcast information, for example, notifying in the SSB, or notifying in the SIB1 or another SIB. A corresponding parameter may also be introduced in signaling configured in an SBFD sub-band for notifying.

Or, for reducing signaling, when the base station configures the SBFD sub-band, but the base station does not send the notification signaling, the UE determines by default that there is the same QCL characteristic of the DMRS antenna port between the transmissions performed by the base station in the SBFD symbol and the non-SBFD symbol. Correspondingly, when the base station sends the notification signaling, the UE believes that there is no same QCL characteristic of the DMRS antenna port between the transmissions performed by the base station in the SBFD symbol and the non-SBFD symbol, and whether there is the same QCL characteristic of the DMRS antenna port between the transmissions is determined according to other related configuration signaling.

Or, for reducing signaling, when the base station configures the SBFD sub-band, but the base station does not send the notification signaling, the UE determines by default that there is no same QCL characteristic of the DMRS antenna port between the transmissions performed by the base station in the SBFD symbol and the non-SBFD symbol, and whether there is the same QCL characteristic of the DMRS antenna port between the transmissions is determined according to the other related configured signaling. Correspondingly, when the base station sends the notification signaling, the UE believes that there is the same QCL characteristic of the DMRS antenna port between the transmissions performed by the base station in the SBFD symbol and the non-SBFD symbol.

An embodiment of the present application further provides a device for determining a quasi-co-location relationship, including at least one processor and a memory configured to be in communication connection with the at least one processor. The memory stores instructions capable of being executed by the at least one processor. The instructions are executed by the at least one processor so as to enable the at least one processor to perform the above method for determining the quasi-co-location relationship.

Thus, in the embodiment of the present application, UE determines, according to a notification of a base station or an agreed rule, whether there is the same QCL characteristic of the DMRS antenna port between the transmissions in different types of symbols (an SBFD symbol and a non-SBFD symbol). A notification method is given: after determining that there is the above QCL characteristic between the transmissions, the above QCL characteristic is applied to each transmission in the random access process, and a rule for determining the QCL characteristic of the DMRS antenna port between the respective transmissions and between the transmissions and an SSB is provided.

After determining that there is no above QCL characteristic between the transmissions, the above QCL characteristic is applied to the respective transmissions in the random access process, and the rule for determining the QCL characteristic between the respective transmissions is provided.

The above determined QCL characteristic is applied to the respective transmissions after random access, and the rule for determining the QCL characteristic between the respective transmissions is provided.

Referring to FIG. 17, for example, a control processor 1001 and a memory 1002 in the device 1000 for determining the quasi-co-location relationship may be connected through a bus. The memory 1002, as a non-transitory computer-readable storage medium, may be used for storing a non-transitory software program and a non-transitory computer-executable program. In addition, the memory 1002 may include a high-speed random access memory and also include a non-transitory memory, for example, at least one disk memory, a flash memory device, or other non-transitory solid state storage devices. In some implementations, the memory 1002 may include memories remotely arranged relative to the control processor 1001, and these remote memories may be connected to the device 1000 for determining the quasi-co-location relationship through a network. Examples of the above network include, but are not limited to, Internet, intranet, local area network, mobile communication network and a combination thereof.

Those skilled in the art may understand that a structure of the device shown in FIG. 17 does not constitute a limitation on the device 1000 for determining the quasi-co-location relationship, and may include more or less components than those shown in the figure, or a combination of some components, or different arrangements of the components.

An embodiment of the present application further provides a computer-readable storage medium. The computer-readable storage medium stores computer-executable instructions. The computer-executable instructions, when executed by one or more control processors, for example, executed by one control processor 1001 in FIG. 17, may cause the above one or more control processors to perform the method for determining the quasi-co-location relationship in the above method embodiment.

The device embodiment described above is only illustrative, units described as separated components may be physically separated or not, namely, may be located in one place, or distributed on a plurality of network units. Some or all of modules may be selected according to actual needs for implementing the objective of the solution of the embodiment.

Those ordinarily skilled in the art may understand that all or some of steps in the method disclosed above, and a system may be implemented as software, firmware, hardware and a suitable combination thereof. Some or all of the physical components may be implemented as software executed by a processor, such as a central processing unit, a digital signal processor or a microprocessor, or implemented as hardware, or implemented as an integrated circuit, such as an application-specific integrated circuit. Such software may be distributed on a computer-readable medium which may include a computer storage medium (or non-transitory medium) and a communication medium (or a transitory medium). As commonly known to those ordinarily skilled in the art, the term "computer storage medium" includes volatile and non-volatile, and removable and non-removable media used for storing information (such as computer-readable instructions, a data structure, a program module or other data) and implemented in any method or technology. The computer storage medium includes, but is not limited to, an RAM, an ROM, an EEPROM, a flash memory or other memory technologies, a CD-ROM, a digital versatile disc (DVD) or other optical disc storage, a cassette, magnetic tape, disk storage or other magnetic storage devices, or any other medium capable of being used for storing desired information and capable of being accessed by a computer. In addition, those ordinarily skilled in the art commonly know that a communication medium usually includes the computer-readable instructions, the data structure, the program module or other data in modulation data signals such as carrier waves or other transmission mechanisms and may include any information delivery medium.

The preferred implementations of the present application are described above, but the present application is not limited to the above implementations. Those skilled and familiar with the art, without violating the spirit of the present application, may also make various equivalent transformations or replacements, and these equivalent transformations or replacements are included in the scope limited by the claims of the present application.

## Claims

1. A method for determining a quasi-co-location relationship, comprising:
determining, by UE according to an indication notification sent by a base station or a rule agreed on with the base station, that a first transmission in an SBFD symbol and a second transmission in a non-SBFD symbol have or do not have a same quasi co-located characteristic of a DMRS antenna port.

2. A method for determining a quasi-co-location relationship, comprising:
causing, by a base station by sending an indication notification to UE or based on an agreed rule, the UE according to the indication notification or the rule agreed on with the base station to determine that a first transmission in an SBFD symbol and a second transmission in a non-SBFD symbol have or do not have a same quasi co-located characteristic of a DMRS antenna port.

3. The method for determining the quasi-co-location relationship according to claim 1 or 2, wherein the indication notification comprises a signaling notification sent by the base station via signaling and/or a broadcast notification sent through system broadcast information; and the method further comprises:
receiving, by the UE, the signaling notification, wherein the signaling notification is used for notifying the UE that the first transmission and the second transmission have or do not have the same quasi co-located characteristic of the DMRS antenna port, or used for providing antenna panel information so as to cause the UE to determine, according to the antenna panel information, that the first transmission and the second transmission have or do not have the same quasi co-located characteristic of the DMRS antenna port;
or
receiving, by the UE, the broadcast notification, wherein the broadcast notification is used for notifying the UE that the first transmission and the second transmission have or do not have the same quasi co-located characteristic of the DMRS antenna port, or used for indicating the UE to determine, according to a quasi-co-location relationship in a current protocol, that the first transmission and the second transmission have or do not have the same quasi co-located characteristic of the DMRS antenna port.

4. The method for determining the quasi-co-location relationship according to claim 3, wherein the antenna panel information comprises at least one of the following:
an identity of an antenna panel;
a quantity of elements of the antenna panel;
positions of the elements of the antenna panel; or
an identity of an antenna port.

5. The method for determining the quasi-co-location relationship according to claim 3, wherein the signaling notification comprises at least one of the following:
a notification sent through RRC signaling;
a notification sent through MAC CE signaling; or
a notification sent through DCI in a PDCCH.

6. The method for determining the quasi-co-location relationship according to claim 5, wherein the DCI comprises at least one of the following:
DCI scheduling a PDSCH;
DCI for activating an SPS configuration;
DCI for activating dormancy;
DCI for deactivating the SPS configuration;
DCI for deactivating a CG PDSCH;
DCI for activating a CG PUSCH; or
DCI for triggering an HARQ-ACK codebook retransmission.

7. The method for determining the quasi-co-location relationship according to claim 5, wherein the RRC signaling comprises at least one of the following:
RRC signaling for configuring an SPS configuration;
RRC signaling for configuring a PDSCH time-domain resource;
RRC signaling for configuring a DMRS of a PDSCH;
RRC signaling for configuring a PDCCH resource;
RRC signaling for configuring a DMRS of a PDCCH;
RRC signaling for configuring an SBFD sub-band, an UL sub-band or a DL sub-band;
RRC signaling for configuring a CG PUSCH;
RRC signaling for configuring a PUCCH; or
self-defined RRC signaling for configuring whether the first transmission and the second transmission have or do not have the same quasi co-located characteristic of the DMRS antenna port.

8. The method for determining the quasi-co-location relationship according to claim 3, wherein the broadcast notification comprises at least one of the following messages:
an SSB;
an SIB1;
an SIB2; or
a self-defined SIB.

9. The method for determining the quasi-co-location relationship according to claim 1 or 2, wherein the first transmission and the second transmission are one of the following transmissions:
a transmission of downlink data;
a transmission of downlink control;
a transmission corresponding to a downlink transmission common channel; or
a transmission corresponding to a downlink parameter signal.

10. The method for determining the quasi-co-location relationship according to claim 1 or 2, wherein the UE and the base station agree on the rule that the UE determines, according to a symbol type of the first transmission and a symbol type of the second transmission, that the first transmission and the second transmission have or do not have the same quasi co-located characteristic of the DMRS antenna port.

11. The method for determining the quasi-co-location relationship according to claim 10, further comprising:
determining, by the UE by default, that the first transmission in the SBFD symbol and the second transmission in the non-SBFD symbol have the same quasi co-located characteristic of the DMRS antenna port in a case where the base station configures an SBFD sub-band and the UE does not receive the indication notification; and
determining, by the UE in a case where the UE receives the indication notification, that the first transmission in the SBFD symbol and the second transmission in the non-SBFD symbol do not have the same quasi co-located characteristic of the DMRS antenna port, or determining, by the UE according to a content of the indication notification, that the first transmission in the SBFD symbol and the second transmission in the non-SBFD symbol have or do not have the same quasi co-located characteristic of the DMRS antenna port.

12. The method for determining the quasi-co-location relationship according to claim 10, further comprising:
determining, by the UE by default, that the first transmission in the SBFD symbol and the second transmission in the non-SBFD symbol do not have the same quasi co-located characteristic of the DMRS antenna port in a case where the base station configures an SBFD sub-band and the UE does not receive the indication notification; and
determining, by the UE in a case where the UE receives the indication notification, that the first transmission in the SBFD symbol and the second transmission in the non-SBFD symbol have the same quasi co-located characteristic of the DMRS antenna port, or determining, by the UE according to a content of the indication notification, that the first transmission in the SBFD symbol and the second transmission in the non-SBFD symbol have or do not have the same quasi co-located characteristic of the DMRS antenna port.

13. The method for determining the quasi-co-location relationship according to claim 1 or 2, further comprising:
attempting, by the UE, to receive a PDSCH scheduled by DCI scrambled by an RA-RNTI or an MSGB-RNTI in the non-SBFD symbol in a case where the UE sends a PRACH transmission to the base station in the SBFD symbol, wherein the PRACH transmission is associated with at least one SSB or CSI-RS resource, and the SSB or CSI-RS resource is in the SBFD symbol;
assuming, by the UE, that the PDSCH and the SSB or CSI-RS resource have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the PDSCH and the SSB or CSI-RS resource do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

14. The method for determining the quasi-co-location relationship according to claim 1 or 2, further comprising:
attempting, by the UE, to receive a PDSCH scheduled by DCI scrambled by an RA-RNTI or an MSGB-RNTI in the SBFD symbol in a case where the UE sends a PRACH transmission to the base station in the non-SBFD symbol, wherein the PRACH transmission is associated with at least one SSB or CSI-RS resource, and the SSB or CSI-RS resource is in the non-SBFD symbol;
assuming, by the UE, that the PDSCH and the SSB or CSI-RS resource have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the PDSCH and the SSB or CSI-RS resource do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

15. The method for determining the quasi-co-location relationship according to claim 1 or 2, further comprising:
attempting, by the UE, to receive DCI scrambled by an RA-RNTI from a PDCCH in the non-SBFD symbol in response to a PRACH transmission triggered by a PDCCH order, wherein the PDCCH order triggers a contention-free random access process for SpCell, and the PDCCH order is transmitted in the SBFD symbol;
assuming, by the UE, that the PDCCH and the PDCCH order have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the PDCCH and the PDCCH order do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

16. The method for determining the quasi-co-location relationship according to claim 1 or 2, further comprising:
attempting, by the UE, to receive DCI scrambled by an RA-RNTI from a PDCCH in the SBFD symbol in response to a PRACH transmission triggered by a PDCCH order, wherein the PDCCH order triggers a contention-free random access process for SpCell, and the PDCCH order is transmitted in the non-SBFD symbol;
assuming, by the UE, that the PDCCH and the PDCCH order have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the PDCCH and the PDCCH order do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

17. The method for determining the quasi-co-location relationship according to claim 1 or 2, further comprising:
attempting, by the UE, to receive DCI scrambled by an RA-RNTI from a PDCCH in the non-SBFD symbol in response to a PRACH transmission triggered by a PDCCH order, wherein the PDCCH order triggers a contention-free random access process for a secondary cell, or CORESET of the PDCCH order is not associated with physical cell ID of a serving cell of the UE;
assuming, by the UE, that CORESET associated with type1-PDCCH CSS set corresponding to the PDCCH where the DCI is located and a PDSCH scheduled by the DCI have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the CORESET associated with the type1-PDCCH CSS set corresponding to the PDCCH where the DCI is located and the PDSCH scheduled by the DCI have different quasi co-located characteristics of the DMRS antenna port in a case where the UE determines that the first transmission in the SBFD symbol and the second transmission in the non-SBFD symbol have the different quasi co-located characteristics of the DMRS antenna port;
wherein the PDSCH is in the SBFD symbol, and the CORESET is in the non-SBFD symbol.

18. The method for determining the quasi-co-location relationship according to claim 1 or 2, further comprising:
attempting, by the UE, to receive DCI scrambled by an RA-RNTI from a PDCCH in the SBFD symbol in response to a PRACH transmission triggered by a PDCCH order, wherein the PDCCH order triggers a contention-free random access process for a secondary cell, or CORESET of the PDCCH order is not associated with physical cell ID of a serving cell of the UE;
assuming, by the UE, that CORESET associated with type1-PDCCH CSS set corresponding to the PDCCH where the DCI is located and a PDSCH scheduled by the DCI have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the CORESET associated with the type1-PDCCH CSS set corresponding to the PDCCH where the DCI is located and the PDSCH scheduled by the DCI have different quasi co-located characteristics of the DMRS antenna port in a case where the UE determines that the first transmission in the SBFD symbol and the second transmission in the non-SBFD symbol have the different quasi co-located characteristics of the DMRS antenna port;
wherein the PDSCH is in the non-SBFD symbol, and the CORESET is in the SBFD symbol.

19. The method for determining the quasi-co-location relationship according to claim 1 or 2, further comprising:
attempting, by the UE, to receive a PDSCH scheduled by DCI scrambled by an RA-RNTI from a PDCCH in the non-SBFD symbol in response to a random access process triggered by a PDCCH order, wherein the PDCCH order triggers a contention-free random access process for SpCell, and the PDCCH order is in the SBFD symbol;
assuming, by the UE, that a DMRS port of the PDSCH and a DMRS port of the PDCCH order have the quasi co-located characteristic in a case where the UE determines that the first transmission in the SBFD symbol and the second transmission in the non-SBFD symbol have the same quasi co-located characteristic of the DMRS antenna port; or
assuming, by the UE, that the DMRS port of the PDSCH and the DMRS port of the PDCCH order do not have the quasi co-located characteristic in a case where the UE determines that the first transmission in the SBFD symbol and the second transmission in the non-SBFD symbol do not have the same quasi co-located characteristic of the DMRS antenna port.

20. The method for determining the quasi-co-location relationship according to claim 1 or 2, further comprising:
attempting, by the UE, to receive a PDSCH scheduled by DCI scrambled by an RA-RNTI from a PDCCH in the SBFD symbol in response to a random access process triggered by a PDCCH order, wherein the PDCCH order triggers a contention-free random access process for SpCell, and the PDCCH order is in the non-SBFD symbol;
assuming, by the UE, that a DMRS port of the PDSCH and a DMRS port of the PDCCH order have the quasi co-located characteristic in a case where the UE determines that the first transmission in the SBFD symbol and the second transmission in the non-SBFD symbol have the same quasi co-located characteristic of the DMRS antenna port; or
assuming, by the UE, that the DMRS port of the PDSCH and the DMRS port of the PDCCH order do not have the quasi co-located characteristic in a case where the UE determines that the first transmission in the SBFD symbol and the second transmission in the non-SBFD symbol do not have the same quasi co-located characteristic of the DMRS antenna port.

21. The method for determining the quasi-co-location relationship according to claim 1 or 2, further comprising:
attempting, by the UE, to receive another DCI in the SBFD symbol in response to a PUSCH transmission scheduled by RAR UL grant or fallbackRAR UL grant or in response to a PUSCH retransmission scheduled by DCI, wherein the DCI is scrambled by a TC-RNTI and the TC-RNTI is provided in a corresponding RAR message, and the PUSCH transmission or the PUSCH retransmission is associated with a PRACH transmission sent by the UE;
assuming, by the UE, that a PDCCH where the another DCI is located in the SBFD symbol and an SSB in the non-SBFD symbol have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the PDCCH where the another DCI is located in the SBFD symbol and the SSB in the non-SBFD symbol do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port;
wherein the SSB is associated with the PRACH transmission.

22. The method for determining the quasi-co-location relationship according to claim 1 or 2, further comprising:
attempting, by the UE, to receive another DCI in the non-SBFD symbol in response to a PUSCH transmission scheduled by RAR UL grant or fallbackRAR UL grant or in response to a PUSCH retransmission scheduled by DCI, wherein the DCI is scrambled by a TC-RNTI and the TC-RNTI is provided in a corresponding RAR message, and the PUSCH transmission or the PUSCH retransmission is associated with a PRACH transmission sent by the UE;
assuming, by the UE, that a PDCCH where the another DCI is located in the non-SBFD symbol and an SSB in the SBFD symbol have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the PDCCH where the another DCI is located in the non-SBFD symbol and the SSB in the SBFD symbol do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port;
wherein the SSB is associated with the PRACH transmission.

23. The method for determining the quasi-co-location relationship according to claim 1 or 2, wherein an associated relationship is configured between an occasion of a PRACH transmission and an SSB, an occasion of one PRACH transmission is associated with SSBs based on different types of symbols, or one SSB is associated with occasions of PRACH transmissions based on different types of symbols, and the different types of symbols comprise the SBFD symbol and the non-SBFD symbol; and the method comprises:
determining, by the UE, that the associated relationship is available in a case where the UE determines that the first transmission in the SBFD symbol and the second transmission in the non-SBFD symbol have the same quasi co-located characteristic of the DMRS antenna port; or
determining, by the UE, that the associated relationship is not available in a case where the UE determines that the first transmission in the SBFD symbol and the second transmission in the non-SBFD symbol do not have the same quasi co-located characteristic of the DMRS antenna port; or
expecting, by the UE, to be respectively configured with occasions of PRACH transmissions for the SBFD symbol and the non-SBFD symbol in a case where the UE determines that the first transmission in the SBFD symbol and the second transmission in the non-SBFD symbol do not have the same quasi co-located characteristic of the DMRS antenna port; or
expecting, by the UE, that the associated relationship is able to be configured between the SSB and the occasion of the PRACH transmission in the same type of symbol and the associated relationship is not configured between the SSBs and the occasions of the PRACH transmissions in the different types of symbols in a case where the UE determines that the first transmission in the SBFD symbol and the second transmission in the non-SBFD symbol do not have the same quasi co-located characteristic of the DMRS antenna port.

24. The method for determining the quasi-co-location relationship according to claim 1 or 2, wherein after establishing an RRC connection, the method further comprises:
attempting, by the UE, to receive DCI in a PDCCH and receive a PDSCH scheduled by the DCI for the UE, wherein one of the PDCCH and the PDSCH is transmitted in the SBFD symbol, and the other is transmitted in the non-SBFD symbol;
assuming, by the UE, that the PDCCH and the PDSCH have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the PDCCH and the PDSCH do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port.

25. The method for determining the quasi-co-location relationship according to claim 1 or 2, wherein after establishing an RRC connection, the method further comprises:
attempting, by the UE, to receive a PDSCH scheduled by DCI in a PDCCH, wherein the DCI is scrambled by a C-RNTI, an SI-RNTI, a P-RNTI, a G-RNTI or an MCCH-RNTI;
assuming, by the UE, that an SSB and the PDSCH have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the SSB and the PDSCH do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port;
wherein the SSB is one or more SSBs associated with an occasion of sending a PRACH transmission by the UE in a random access process, and the SSB and the PDSCH are respectively in different types of symbols, and the different types of symbols comprise the SBFD symbol and the non-SBFD symbol.

26. The method for determining the quasi-co-location relationship according to claim 1 or 2, wherein after establishing an RRC connection, the method further comprises:
attempting, by the UE, to receive a PDSCH scheduled by DCI in a PDCCH, wherein the DCI is scrambled by a C-RNTI, an SI-RNTI, a P-RNTI, a G-RNTI or an MCCH-RNTI;
assuming, by the UE, that the PDCCH, the PDSCH and an SSB have the same quasi co-located characteristic of the DMRS antenna port in a case where the UE determines that the first transmission in the SBFD symbol and the second transmission in the non-SBFD symbol have the same quasi co-located characteristic of the DMRS antenna port; or
assuming, by the UE, that the PDCCH, the PDSCH and the SSB do not have the same quasi co-located characteristic of the DMRS antenna port in a case where the UE determines that the first transmission in the SBFD symbol and the second transmission in the non-SBFD symbol do not have the same quasi co-located characteristic of the DMRS antenna port;
wherein the SSB is one or more SSBs associated with an occasion of sending a PRACH transmission by the UE in a random access process, and not all of the PDCCH, the PDSCH and the SSB are in the SBFD symbol or the non-SBFD symbol.

27. The method for determining the quasi-co-location relationship according to claim 1 or 2, wherein the rule agreed on by the UE and the base station comprises at least one of the following:
the same quasi co-located characteristic of the DMRS antenna port exists between a plurality of SSBs received by the UE;
downlink transmissions based on different types of symbols of the UE in a random access process have the same quasi co-located characteristic of the DMRS antenna port; or
the SSB received by the UE and the downlink transmission have the same quasi co-located characteristic of the DMRS antenna port;
wherein the plurality of SSBs at least comprise one SSB in the non-SBFD symbol, and the SSB in the non-SBFD symbol is associated with an occasion of a PRACH transmission in the SBFD symbol; and the downlink transmission comprises a PDSCH, a PDCCH and a CSI-RS.

28. A device for determining a quasi-co-location relationship, comprising at least one processor and a memory configured to be in communication connection with the at least one processor; wherein the memory stores instructions capable of being executed by the at least one processor, and the instructions are executed by the at least one processor so as to enable the at least one processor to perform the method for determining the quasi-co-location relationship according to any one of claims 1 to 27.

29. A computer-readable storage medium, wherein the computer-readable storage medium stores computer-executable instructions, and the computer-executable instructions are configured to cause a computer to perform the method for determining the quasi-co-location relationship according to any one of claims 1 to 27.
